(19) Europäisches Patentamt / European Patent Office / Office européen des brevets

(11) **EP 4 319 331 B1**

(12) **EUROPEAN PATENT SPECIFICATION**

(45) Date of publication and mention
of the grant of the patent:
**06.05.2026 Bulletin 2026/19**

(21) Application number: **21933682.3**

(22) Date of filing: **30.03.2021**

(51) International Patent Classification (IPC):
**H04W 56/00** (2009.01)

(52) Cooperative Patent Classification (CPC):
**H04B 7/18513; H04W 56/0035; H04W 56/0045**

(86) International application number:
**PCT/CN2021/084140**

(87) International publication number:
**WO 2022/205002 (06.10.2022 Gazette 2022/40)**

(54) **ADJUSTING METHOD AND DETERMINING METHOD FOR TRANSMISSION TIMING, AND TERMINAL DEVICE**

EINSTELLUNGSVERFAHREN UND BESTIMMUNGSVERFAHREN FÜR ÜBERTRAGUNGSTIMING SOWIE ENDGERÄTEVORRICHTUNG

PROCÉDÉ DE RÉGLAGE ET PROCÉDÉ DE DÉTERMINATION D'UNE SYNCHRONISATION DE TRANSMISSION, ET DISPOSITIF TERMINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.02.2024 Bulletin 2024/06**

(73) Proprietor: **GUANGDONG OPPO MOBILE TELECOMMUNICATIONS CORP., LTD.**
**Dongguan, Guangdong 523860 (CN)**

(72) Inventor: **WU, Zuomin**
**Dongguan, Guangdong 523860 (CN)**

(74) Representative: **Kraus & Lederer PartGmbB**
**Thomas-Wimmer-Ring 15**
**80539 München (DE)**

(56) References cited:
**WO-A1-2020/041757     WO-A1-2021/022496**
**CA-A1- 3 135 510        CN-A- 109 788 548**
**CN-A- 111 867 041       US-A1- 2019 394 770**

- **ERICSSON: "On UL time and frequency synchronization enhancements for NTN", vol. RAN WG1, no. e-Meeting; 20210125 - 20210205, 19 January 2021 (2021-01-19), XP051971266, Retrieved from the Internet <URL:https://ftp.3gpp.org/tsg_ran/WG1_RL1/TSGR1_104-e/Docs/R1-2100927.zip R1-2100927 On UL time and frequency synchronization enhancements for NTN.docx> [retrieved on 20210119]**
- **OPPO: "Discussion on timing requirements for NR NTN RRM", vol. RAN WG4, no. Electronic Meeting; 20200125 - 20200205, 15 January 2021 (2021-01-15), XP052180045, Retrieved from the Internet <URL:https://ftp.3gpp.org/tsg_ran/WG4_Radio/TSGR4_98_e/Docs/R4-2101541.zip R4-2101541 Discussion on timing requirements for NTN RRM.doc> [retrieved on 20210115]**
- **ASIA PACIFIC TELECOM ET AL: "Timing relationship enhancements to NB-IoT in NTN", vol. RAN WG1, no. e-Meeting; 20210125 - 20210205, 19 January 2021 (2021-01-19), XP051971312, Retrieved from the Internet <URL:https://ftp.3gpp.org/tsg_ran/WG1_RL1/TSGR1_104-e/Docs/R1-2100977.zip R1-2100977 Timing relationship enhancements to NB-IoT in NTN.docx> [retrieved on 20210119]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- MEDIATEK INC: "UE UL timing adjustment due to Rx beam change", vol. RAN WG4, no. Ljubljana, Slovenia; 20190826 - 20190830, 16 August 2019 (2019-08-16), XP051771175, Retrieved from the Internet <URL:http://www.3gpp.org/ftp/tsg_ran/WG4_Radio/TSGR4_92/Docs/R4-1908179.zip> [retrieved on 20190816]
- OPPO: "Discussion on enhancement of UL time and frequency synchronization", 3GPP DRAFT; R1-2100157, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210125 - 20210205, 18 January 2021 (2021-01-18), Mobile Competence Centre ; 650, route des Lucioles ; F-06921 Sophia-Antipolis Cedex ; France , XP051970275
- MODERATOR (THALES): "FL Summary on enhancements on UL time and frequency synchronization for NR", 3GPP DRAFT; R1-2101938, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210125 - 20210205, 29 January 2021 (2021-01-29), Mobile Competence Centre ; 650, route des Lucioles ; F-06921 Sophia-Antipolis Cedex ; France , XP051976013

# EP 4 319 331 B1

## Description

### TECHNICAL FIELD

The embodiments of the present disclosure relate to the field of communication, and more particularly, to an adjustment method for transmission timing, a terminal device and a computer-readable storage medium.

### BACKGROUND

In a New Radio-Non Terrestrial Network (NR-NTN) system, similar to a New Radio (NR) system, a User Equipment (UE) needs to consider impact of Timing Advance (TA) when performing uplink transmission. However, in the terrestrial communication system, a propagation delay of signal communication is usually less than 1ms. In the NR-NTN system, due to a long communication distance between a terminal device and a satellite (or network device), the propagation delay of signal communication is very large, which may range from tens of milliseconds to hundreds of milliseconds, depending on the altitude of the satellite orbit and the traffic type of satellite communication. Based on this, in order to deal with a relatively large propagation delay, the scheme related to the transmission timing of the NR-NTN system needs to be enhanced compared with the NR system. In addition, since the position of the satellite changes in real time, the transmission timing adjustment method for the NR system is not suitable for the NTN system.

Therefore, it is desired that the present disclosure needs a transmission timing adjustment method for the NTN system.

3GPP DRAFT, R1-2100927, ERICSSON: "On UL time and frequency synchronization enhancements for NTN" discloses that the purpose of the UE-specific TA is to compensate for the RTT of the service link. The UE-specific TA is autonomously determined by the UE based on GNSS-acquired UE position and serving satellite position from broadcast ephemeris. Proposal 4: the TA to be used by NTN UE in RRC_IDLE, RRC _INACTIVE and RRC _CONNECTED states should be as follows: $T_{TA}=(N_{TA}+N_{TA,offset}+N_{TA,UE\text{-}specific}+N_{T4,common})\times T_c$.

Document 3GPP DRAFT R1-2100977: "Timing relationship enhancements to NB-IoT in NTN", ASIA PACIFIC TELECOM ET AL (2021-01-19) discloses a transmission timing adjustment method according to the prior art.

### SUMMARY

In a first aspect, an embodiment of the present disclosure provides a transmission timing adjustment method, which is defined in claim 1.

In a second aspect, an embodiment of the present disclosure provides a terminal device, which is defined in claim 13.

In a third aspect, an embodiment of the present disclosure provides a computer-readable storage medium, which is defined in claim 14.

Further advantageous embodiments of the present disclosure are indicated in the dependent claims.

It is to be understood that both the foregoing general description and the following detailed description are exemplary only, and are not restrictive of the present disclosure.

### BRIEF DESCRIPTION OF DRAWINGS

FIG. 1 to FIG. 3 are schematic block diagrams of system frameworks provided by embodiments of the present disclosure;

FIG. 4 and FIG. 5 respectively show schematic diagrams of NTN scenarios based on a transparent payload satellite and a regenerative payload satellite;

FIG. 6 is a schematic structural diagram of Case 1 in a timing relationship of an NTN system provided by an embodiment of the present disclosure;

FIG. 7 is a schematic structural diagram of Case 2 in a timing relationship of an NTN system provided by an embodiment of the present disclosure;

FIG. 8 is a schematic diagram of a timing relationship between a downlink frame and an uplink frame of a terminal device in an NR system provided by an embodiment of the present disclosure;

FIG. 9 is a schematic diagram of adjusting $N_{TA}$ when a downlink reference timing changes in an NR system provided by an embodiment of the present disclosure;

FIG. 10 is a schematic flowchart of a transmission timing adjustment method provided by an embodiment of the present disclosure;

**EP 4 319 331 B1**

FIG. 11 is a schematic diagram of a timing relationship between a downlink frame and an uplink frame of a terminal device in an NTN system provided by an embodiment of the present disclosure;

FIG. 12 is a schematic diagram of overlapping of two adjacent time slots due to adjusting a first uplink TA value according to first TA information according to an embodiment of the present disclosure;

FIG. 13 is a schematic diagram of no overlapping of two adjacent time slots due to adjusting a first uplink TA value according to first TA information provided by an embodiment of the present disclosure;

FIG. 14 is a schematic comparison diagram before after adjustment of a first uplink TA value by a terminal device according to first TA information according to an embodiment of the present disclosure;

FIG. 15 is an example of reducing a length of a later time slot among two adjacent time slots provided by an embodiment of the present disclosure;

FIG. 16 is an exemplary flowchart of a transmission timing determination method provided by an embodiment of the present disclosure;

FIG. 17 and FIG. 18 are schematic block diagrams of terminal devices according to embodiments of the present disclosure;

FIG. 19 is a schematic structural diagram of a communication device according to an embodiment of the present disclosure; and

FIG. 20 is a schematic structural diagram of a chip according to an embodiment of the present disclosure.

## DESCRIPTION OF EMBODIMENTS

Technical solutions according to the embodiments of the present disclosure will be described below in conjunction with accompanying drawings of the embodiments of the present disclosure.

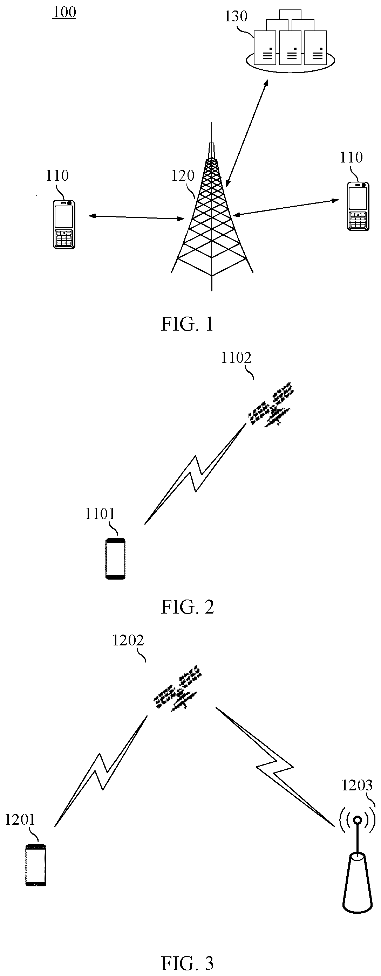

FIG. 1 is a schematic block diagram of an application scenario of an embodiment of the present disclosure.

As shown in FIG. 1, a communication system 100 may include a terminal device 110 and a network device 120. The network device 120 may communicate with the terminal device 110 via an air interface. Multi-service transmission is supported between the terminal device 110 and the network device 120.

It should be understood that the embodiments of the present disclosure are only described by taking the communication system 100 as an example for illustration, but the embodiments of the present disclosure are not limited thereto. That is to say, the technical solutions of the embodiments of the present disclosure may be applied to various communication systems, e.g., a Long Term Evolution (LTE) system, an LTE Time Division Duplex (TDD), a Universal Mobile Communication System (UMTS), an Internet of Things (IoT) system, a Narrow Band Internet of Things (NB-IoT) system, an enhanced Machine-Type Communications (eMTC) system, a 5G communication system (also known as New Radio (NR) communication system), or future communication systems, etc.

In the communication system 100 as shown in FIG. 1, the network device 120 may be an access network device that communicates with the terminal device 110. The access network device may provide communication coverage for a specific geographic area, and may communicate with the terminal device(s) 110 (such as UE(s)) located in the coverage area.

The network device 120 may be an evolved base station (Evolutional Node B, eNB or eNodeB) in a Long Term Evolution (LTE) system, or a Next Generation Radio Access Network (NG RAN) device, either a base station (gNB) in the NR system, or a wireless controller in a Cloud Radio Access Network (CRAN), or the network device 120 may be a relay station, an access point, a vehicle-mounted device, a wearable device, a hub, a switch, a bridge, a router, or a network device in the future evolved Public Land Mobile Network (PLMN), etc.

The terminal device 110 may be any terminal device, including but not limited to, a terminal device connected to the network device 120 or other terminal devices by wire or wirelessly.

For example, the terminal device 110 may refer to an access terminal, a User Equipment (UE), a user unit, a user station, a mobile station, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device having a wireless communication function, a computing device or another processing device connected to a wireless modem, a vehicle-mounted device, a wearable device, a terminal device in a 5G network, or a terminal device in the future evolved PLMN, etc.

The terminal device 110 may be used for Device to Device (D2D) communication.

The wireless communication system 100 may also include a core network device 130 for communicating with a base station. The core network device 130 may be a 5G Core (5GC) device, for example, Access and Mobility Management Function (AMF), and for another example, Authentication Server Function (AUSF), and for another example, User Plane Function (UPF), and for another example, Session Management Function (SMF). Alternatively, the core network device 130 may also be an Evolved Packet Core (EPC) device of the LTE network, for example, a Session Management Function + Core Packet Gateway, (SMF+PGW-C) device. It should be understood that the SMF+PGW-C

4

may implement functions of both SMF and PGW-C. In the process of network evolution, the above-mentioned core network device may be called by other names, or a new network entity may be formed by dividing functions of the core network, which is not limited in the embodiments of the present disclosure.

Various functional units in the communication system 100 may also communicate by establishing a connection via a Next Generation (NG) interface.

For example, the terminal device establishes an air interface connection with the access network device via an NR interface for transmitting user plane data and control plane signaling. The terminal device may establish a control plane signaling connection with the AMF via an NG interface 1 (N1 for short). The access network device, such as a Next Generation radio access base station (gNB), may establish a user plane data connection with the UPF via an NG interface 3 (N3 for short). The access network device may establish a control plane signaling connection with the AMF via an NG interface 2 (N2 for short). The UPF may establish a control plane signaling connection with the SMF via an NG interface 4 (N4 for short). The UPF may exchange user plane data with the data network via an NG interface 6 (N6 for short). The AMF establishes a control plane signaling connection with the SMF via an NG interface 11 (N11 for short). The SMF may establish a control plane signaling connection with the PCF via an NG interface 7 (N7 for short).

FIG. 1 schematically shows one base station, one core network device, and two terminal devices. Alternatively, the wireless communication system 100 may include a plurality of base station devices, and each base station may cover other numbers of terminals within its coverage, which is not limited in the embodiments of the present disclosure.

The 3rd Generation Partnership Project (3GPP) is studying Non-Terrestrial Network (NTN) technology. The NTN generally provides communication services to ground users by means of satellite communication. Compared with the terrestrial cellular network communication, the satellite communication has many unique advantages. First, the satellite communication is not restricted by the user's region. For example, the general land communication cannot cover areas such as oceans, mountains, deserts, etc. that cannot be equipped with communication devices or are not covered by communication due to sparse population. For the satellite communication, since one satellite may cover a larger area of the ground, and the satellite may orbit the earth, every corner of the earth may be covered by the satellite communication theoretically. Second, the satellite communication has a greater social value. The satellite communication may cover remote mountainous areas, poor and backward countries or regions at a lower cost, so that people in these regions may enjoy advanced voice communication and mobile Internet technology, which facilitates to narrow the digital gap with developed regions and promotes the development of these regions. Third, the distance of the satellite communication is longer, and the cost of communication does not increase significantly with the increase of the communication distance. Finally, the stability of the satellite communication is higher, which is not restricted by natural disasters.

The NTN technology may be combined with various communication systems. For example, the NTN technology may be combined with the NR system to form an NR-NTN system. For another example, the NTN technology may be combined with the IoT system to form an IoT-NTN system. As an example, the IoT-NTN system may include an NB-IoT-NTN system and an eMTC-NTN system.

FIG. 2 is a schematic diagram of an architecture of another communication system provided by an embodiment of the present disclosure.

As shown in FIG. 2, the communication system includes a terminal device 1101 and a satellite 1102, and the wireless communication may be performed between the terminal device 1101 and the satellite 1102. The network formed between the terminal device 1101 and the satellite 1102 may also be referred to as NTN. In the architecture of the communication system as shown in FIG. 2, the satellite 1102 may function as a base station, and direct communication may be performed between the terminal device 1101 and the satellite 1102. Under the system architecture, the satellite 1102 may be referred to as a network device. In some embodiments of the present disclosure, the communication system may include a plurality of network devices 1102, and each network device 1102 may cover other numbers of terminal devices within its coverage, which is not limited in the embodiment of the present disclosure.

FIG. 3 is a schematic diagram of an architecture of another communication system provided by an embodiment of the present disclosure.

As shown in FIG. 3, the communication system includes a terminal device 1201, a satellite 1202 and a base station 1203. The wireless communication may be performed between the terminal device 1201 and the satellite 1202, and the communication may be performed between the satellite 1202 and the base station 1203. The network formed among the terminal device 1201, the satellite 1202 and the base station 1203 may also be referred to as NTN. In the architecture of the communication system as shown in FIG. 3, the satellite 1202 may not function as a base station, and the communication between the terminal device 1201 and the base station 1203 needs to be relayed via the satellite 1202. Under the system architecture, the base station 1203 may be referred to as a network device. In some embodiments of the present disclosure, the communication system may include a plurality of network devices 1203, and each network device 1203 may cover other numbers of terminal devices within its coverage, which is not limited in the embodiments of the present disclosure. The network device 1203 may be the network device 120 in FIG. 1.

It should be understood that the aforementioned satellite 1102 or satellite 1202 includes but is not limited to:

a Low-Earth Orbit (LEO) satellite, a Medium-Earth Orbit (MEO) satellite, a Geostationary Earth Orbit (GEO) satellite, a High Elliptical Orbit (HEO) satellite, etc. The satellite may use a plurality of beams to cover the ground. For example, one satellite may form dozens or even hundreds of beams to cover the ground. In other words, one satellite beam may cover a ground area with a diameter of tens to hundreds of kilometers to ensure the coverage of the satellite and to improve the system capacity of the entire satellite communication system.

As an example, the altitude range of the LEO may be 500km to 1500km, the corresponding orbit period may be about 1.5 hours to 2 hours, the signal propagation delay of single-hop communication between users may generally be less than 20ms, and the maximum satellite visible time may be 20 minutes. The signal propagation distance of the LEO is shorter and the link loss is smaller, and the requirements for the transmit power of the user terminal are not higher. The orbital height of the GEO may be 35786km, the rotation period around the earth may be 24 hours, and the signal propagation delay of single-hop communication between the users may generally be 250ms.

In order to ensure the coverage of the satellite and improve the system capacity of the entire satellite communication system, the satellite uses multi-beams to cover the ground. A satellite may form dozens or even hundreds of beams to cover the ground. One satellite beam may cover a ground area with a diameter of tens to hundreds of kilometers.

It should be noted that FIG. 1 to FIG. 3 are only illustrations of systems applicable to the present disclosure. Of course, the methods as shown in the embodiments of the present disclosure may also be applicable to other systems. Furthermore, the terms "system" and "network" are often used interchangeably herein. The term "and/or" herein just defines some association between associated objects, which means that there may be three relationships. For example, A and/or B may include three cases where there is only A, there are both A and B, and there is only B. In addition, the character "/" herein generally indicates that the contextual objects are in an "or" relationship. It should also be understood that "indicating" mentioned in the embodiments of the present disclosure may be a direct indication, or an indirect indication, and may also mean that there is some association therebetween. For example, A indicating B may mean that A directly indicates B, for example, B may be obtained from A; or may mean that A indirectly indicates B, for example, A indicates C, and B may be obtained from C; or may mean that there is some association between A and B. It should also be understood that "corresponding" mentioned in the embodiments of the present disclosure may mean that there is a direct correspondence or an indirect correspondence between the both, or that there is an association, or indicating and indicated, or configuring and configured, between the both. It should also be understood that "predefined" or "predefined rules" mentioned in the embodiments of the present disclosure may be implemented by saving corresponding codes or tables in the device (e.g., the terminal device or the network device) in advance or in other ways applicable to indicating related information, which is not particularly limited in the embodiments of the present disclosure. For example, "predefined" may refer to being defined in protocols. It should also be understood that in the embodiment of the present disclosure, "protocol" may refer to a standard protocol in the communication field, for example, it may include an LTE protocol, an NR protocol, and related protocols applied to the future communication systems, which are not limited in the present disclosure.

The satellites may be classified into two categories of transparent payload and regenerative payload based on the functions they provide. The transparent payload satellite only provides functions of radio frequency filtering, frequency conversion and amplification, and only provides transparent forwarding of the signal without changing waveform signals it forwards. The regenerative payload satellite, in addition to providing the functions of radio frequency filtering, frequency conversion and amplification, it may also provide functions of demodulation/decoding, routing/conversion, coding/modulation, which have part or all of the functions of the base station.

In the NTN, one or more gateways (Gateway) may be included for communication between the satellites and the terminals.

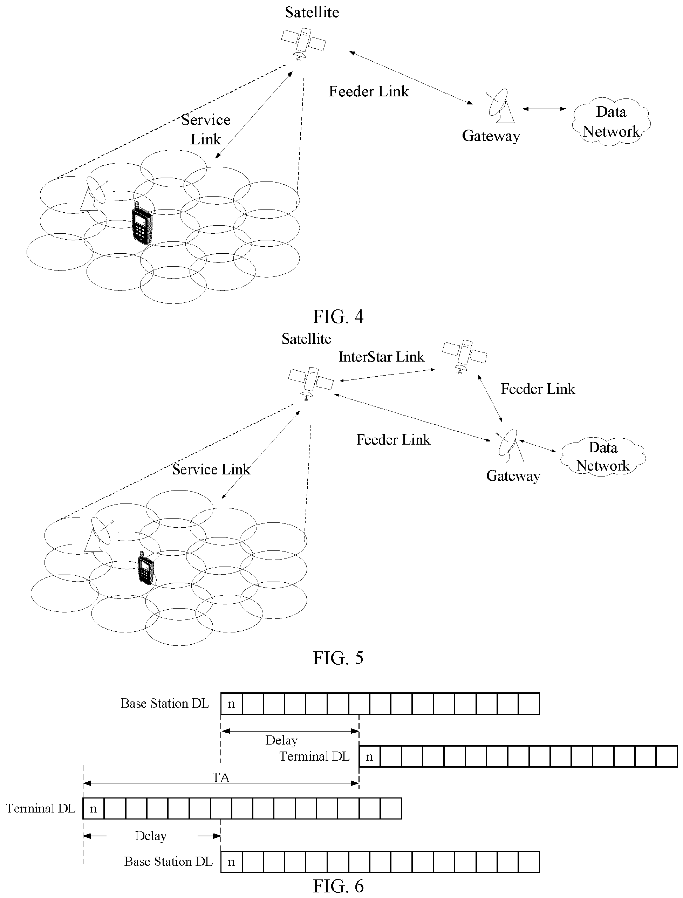

FIG. 4 and FIG. 5 respectively show schematic diagrams of NTN scenarios based on a transparent payload satellite and a regenerative payload satellite.

As shown in FIG. 4, for the NTN scenario based on the transparent payload satellite, the communication between the gateway and the satellite is performed via a feeder link, and the communication between the satellite and the terminal may be performed via a service link. As shown in FIG. 5, for the NTN scenario based on the regenerative payload satellite, the communication between satellites is performed via an InterStar link, the communication between the gateway and the satellite is performed via the feeder link, and the communication between the satellite and the terminal is performed via the service link.

The timing relationship of the NTN system will be described below.

In the terrestrial communication system, the propagation delay of signal communication is generally less than 1ms. In the NTN system, since the communication distance between the terminal device and the satellite (or the network device) is very long, the propagation delay of the signal communication is very large, ranging from tens of milliseconds to hundreds of milliseconds, particularly depending on the satellite orbital height and the traffic type of the satellite communication. In order to deal with a relatively large propagation delay, the timing relationship of the NTN system needs to be enhanced compared with the NR system.

In the NTN system, like the NR system, the UE needs to consider the impact of Timing Advance (TA) when performing uplink transmission. Since the propagation delay in the system is relatively large, the range of the TA value is also relatively large. When the UE is scheduled to perform uplink transmission in time slot n (or subframe n), the UE considers a round-trip propagation delay, and transmits in advance during the uplink transmission, so that the signal arrives at the network device side at an uplink time slot n (or subframe n) of the network device side. Particularly, the timing relationship in the NTN system may include two cases, i.e., Case 1 and Case 2.

FIG. 6 is a schematic structural diagram of Case 1 in a timing relationship of an NTN system provided by an embodiment of the present disclosure.

As shown in FIG. 6, for Case 1, the downlink subframe and the uplink subframe at the network device side are aligned. Correspondingly, in order to make the uplink transmission of the UE arrive at the network device side in alignment with the uplink subframe of the network device side, the UE needs to use a larger TA value. In some cases, the TA value corresponds to a timing offset value Koffset.

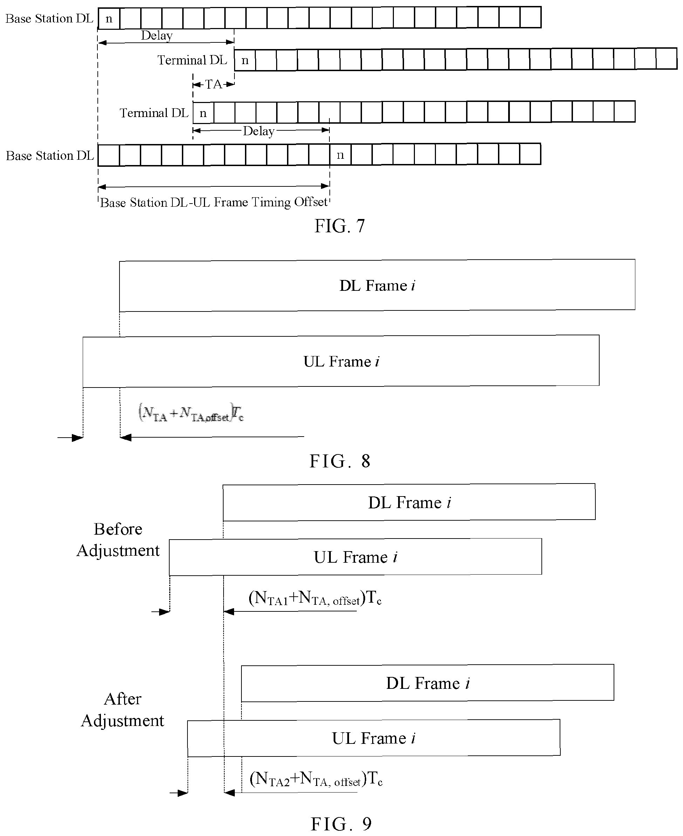

FIG. 7 is a schematic structural diagram of Case 2 in a timing relationship of an NTN system provided by an embodiment of the present disclosure.

As shown in FIG. 7, for Case 2, there is an offset value between the downlink subframe and the uplink subframe at the network device side. In this case, if the uplink transmission of the UE is to be aligned with the uplink subframe at the network device side when it arrives at the network device side, the UE only needs to use a smaller TA value. In some cases, the TA value corresponds to a timing offset value Koffset. In other cases, a Round-Trip Time (RTT) of the UE corresponds to a timing offset value Koffset.

In order to facilitate the understanding of the solutions provided by the present disclosure, the transmission timing adjustment method for the NR system will be described below.

In the NR system, a terminal device may be configured with one or more Timing Advance Groups (TAGs). A TAG refers to a group of serving cells configured by Radio Resource Control (RRC), and the same timing reference cell and the same TA value are used for the uplink configuration corresponding to the group of serving cells. If a TAG includes a MAC entity of a Special Cell (SpCell), it is considered as a Primary Timing Advance Group (PTAG); otherwise, it is considered as a Secondary Timing Advance Group (STAG). In a Dual Connectivity (DC) scenario, according to a Master Cell Group (MCG) or a Secondary Cell Group (SCG) associated with the MAC entity, the SpCell refers to a Primary Cell (PCell) in the MCG or a Primary Secondary Cell (PSCell) in the SCG. In other scenarios, the SpCell refers to PCell.

The network device may maintain uplink time alignment by configuring a high-level parameter, such as an alignment timer (timeAlignmentTimer), via RRC, and each TAG is configured with an alignment timer to control a time duration within which the MAC entity may consider that the uplink of the serving cell associated with the TAG is in time alignment. The terminal device may perform TA adjustment according to a Timing Advance Command (TAC) transmitted by the network device. When the terminal device receives a Timing alignment Command (TAC) Media Access Control (MAC) Control Element (CE), if $N_{TA}$ corresponding to the indicated TAG has been applied to the maintenance process, the TAC is applied to adjust the indicated TAG, and the alignment timer associated with the indicated TAG is started or restarted. The TAC MAC CE includes 2-bit TAG Identity (ID) indication information and 6-bit TAC indication information.

The timing adjustment process of the terminal device will be described as follows.

The terminal device is provided with a TA offset value $N_{TA, offset}$, which is determined according to a frequency domain range of a cell and a multiplexing mode of uplink transmission (for example, determined according to a network deployment frequency band and an LTE or NR coexistence situation).

During a random access procedure, the terminal device determines $T_{TA}$ according to $T_{TA}=N_{TA, offset}*Tc$, and performs Msg1 or MsgA transmission according to the determined $T_{TA}$.

If the terminal device successfully receives a Random Access Response (RAR) transmitted by the network device, the RAR includes a TA command, and the TA command includes a $T_A$ for indication, and thus the terminal device may determine $N_{TA}$ in a Timing Advance Group (TAG) based on the $T_A$, i.e., $N_{TA}=T_A*16*64/2^\mu$, where $T_A = 0, 1, 2, ..., 3846$.

The determination of the $N_{TA}$ value is related to the subcarrier spacing of the first uplink transmission of the terminal device after receiving the RAR.

The terminal device determines $T_{TA}$ according to $T_{TA} = (N_{TA}+N_{TA, offset})*Tc$, and performs transmission of an uplink channel or signal (such as PUSCH scheduled by an RAR uplink grant, or PUSCH scheduled by a fallback RAR uplink grant, or PUCCH corresponding to a successful RAR and carrying HARQ-ACK information) according to the determined $T_{TA}$.

If the terminal device receives the Timing Advance Command (TAC) MAC CE, in which an indication of the TA command $T_A$ is included, the terminal device updates the $N_{TA}$ according to the $T_A$ value, that is, the current $N_{TA\_old}$ is adjusted to $N_{TA\_new}$, $N_{TA\_new}= N_{TA\_old} +(T_A -31)*16*64/2^\mu$, where $T_A = 0, 1, 2, ..., 63$.

The determination of the $N_{TA\_new}$ value is related to the subcarrier spacing. The subcarrier spacing may be a subcarrier spacing of the uplink active BWP; or if the terminal device is configured with a plurality of uplink active BWPs, the subcarrier spacing may be a largest one of the plurality of uplink active BWPs; or if the terminal device performs uplink active BWP switching between receiving the TA command and applying the corresponding TA adjustment, the subcarrier spacing may be a subcarrier spacing of a new uplink active BWP; or if the terminal device performs uplink active BWP switching after applying the corresponding TA adjustment, the terminal device assumes that an absolute TA adjustment value remains unchanged before and after the active BWP switching.

The terminal device determines $T_{TA}$ according to $T_{TA} = (N_{TA} + N_{TA, offset})*Tc$, and performs, according to the determined $T_{TA}$, uplink channel or signal transmission (for example, other uplink transmissions than transmission of Msg1, MsgA, Physical Uplink Shared Channel (PUSCH) scheduled by the RAR uplink grant, PUSCH scheduled by the fallback RAR uplink grant, and Physical Uplink Control Channel (PUCCH) corresponding to the successful RAR and carrying Hybrid Automatic Repeat Request-Acknowledgement (HARQ-ACK) information).

$\mu$ represents subcarrier spacing configuration, and a subcarrier spacing corresponding to $\mu$ is $2^{\mu}*15$ kHz, and Tc represents a sampling time interval unit, where $Tc = 1/(480*1000*4096)$.

If the terminal device receives a TA command in the uplink time slot n, the terminal device shall perform uplink transmission by applying a corresponding TA adjustment from the uplink time slot n+k+1 on, and the uplink transmission does not include the PUSCH scheduled by the RAR uplink grant, the PUSCH scheduled by the fallback RAR uplink grant, and the PUCCH corresponding to the successful RAR and carrying the HARQ-ACK information.

FIG. 8 is a schematic diagram of a timing relationship between a downlink frame and an uplink frame of a terminal device in an NR system provided by an embodiment of the present disclosure.

As shown in FIG. 8, for the timing relationship between the downlink frame and the uplink frame of the terminal device, a time length in advance of the uplink frame transmission relative to the downlink frame reception is $T_{TA} = (N_{TA} + N_{TA, offset})*Tc$ for the frame with the same number. In other words, in the timing adjustment process of the terminal device, the terminal device should ensure that both the timing accuracy of the initial transmission and the subsequent slow timing adjustment value meet certain indexes. As mentioned above, the $N_{TA, offset}$ value is determined according to the frequency domain range of the cell and the multiplexing mode of the uplink transmission. The $N_{TA}$ value is determined according to the received TA command value, and does not change until the next TA command value is received.

FIG. 9 is a schematic diagram of adjusting $N_{TA}$ when a downlink reference timing changes in an NR system provided by an embodiment of the present disclosure.

As shown in FIG. 9, if the terminal device finds that the downlink reference timing changes and is not compensated, or is partially compensated by the uplink timing adjustment without a TA command, the terminal device adjusts the $N_{TA}$ value accordingly. In other words, the adjustment process is that the $N_{TA}$ value is adjusted from $N_{TA1}$ to $N_{TA2}$.

If an overlap between two adjacent time slots occurs due to the TA adjustment performed according to the TA command, the length of the later time slot will be reduced relative to the earlier time slot.

In the NTN, such as New Radio-Non Terrestrial Network (NR-NTN), system, similar to the NR system, the User Equipment (UE) needs to consider the impact of Timing Advance (TA) for the uplink transmission. However, in the terrestrial communication system, the propagation delay of the signal communication is usually less than 1ms. In the NTN system, due to the long communication distance between the terminal device and the satellite (or network device), the propagation delay of the signal communication is very large, which may range from tens of milliseconds to hundreds of milliseconds, depending on the altitude of the satellite orbit and the traffic type of satellite communication. Based on this, in order to deal with a relatively large propagation delay, the scheme related to the transmission timing of the NTN system needs to be enhanced compared with the NR system. In addition, since the position of the satellite changes in real time, the transmission timing adjustment method for the NR system is not suitable for the NTN system. Therefore, the embodiments of the present disclosure provide a transmission timing adjustment method, a transmission timing determination method, and a terminal device, which further improve the transmission timing adjustment method for the NTN system.

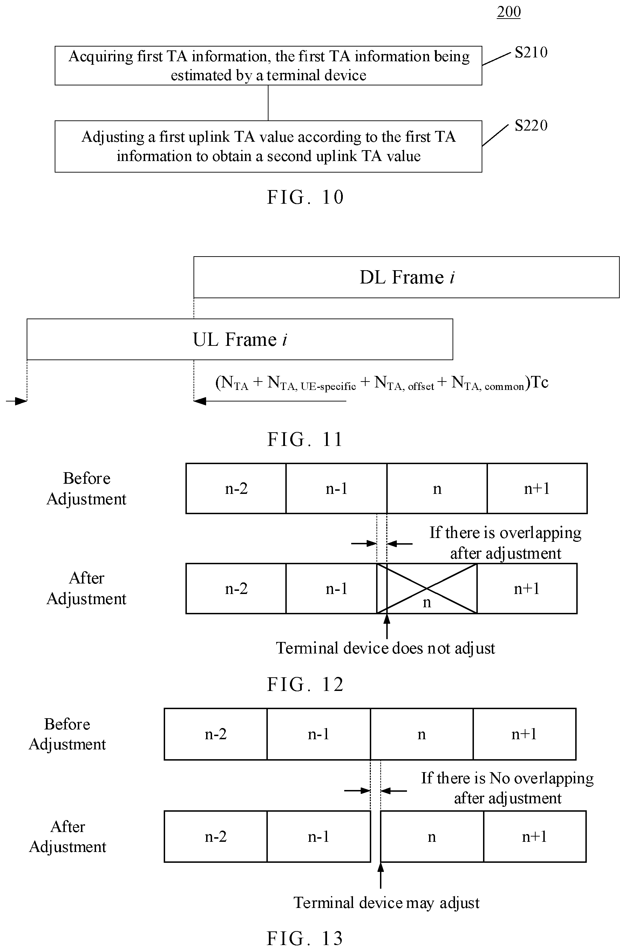

FIG. 10 is a schematic flowchart of a transmission timing adjustment method 200 provided by an embodiment of the present disclosure, which may be performed by a terminal device, e.g., the terminal devices as shown in FIG. 1 to FIG. 5.

As shown in FIG. 10, the method 200 includes part or all of the following:

S210 of acquiring first TA information, the first TA information being estimated by the terminal device; and
S220 of adjusting a first uplink TA value according to the first TA information to obtain a second uplink TA value.

In this embodiment, the first TA information is estimated by the terminal device, and the first uplink TA value is adjusted according to the first TA information to obtain the second uplink TA value. The terminal device is designed to have the capability of adjusting the TA by itself, or the terminal device needs the first TA information estimated by itself for uplink transmission, that is, the timing relationship between the downlink frame and the uplink frame of the terminal device is determined according to the first TA information estimated by the UE itself. Based on this, for the NTN system, when a position of a satellite changes, the second uplink TA value obtained by adjusting the first uplink TA value according to the first TA information is used for uplink transmission, which facilitates the terminal device to self-compensate the variation of the transmission timing caused by the variation of the position of the satellite, and improves the transmission timing adjustment method for the NTN system.

In an implementation, the first TA information is used to adjust the first uplink TA value or to obtain the second uplink TA value.

In an implementation, the terminal device transmits a first physical channel or signal according to the second uplink TA value.

In an implementation, the first TA information is acquired by the terminal device itself. The first TA information is acquired by the terminal device based on synchronization assistance information. Alternatively, the synchronization assistance information includes at least one of: timing information, frequency offset information, position information, and ephemeris information. Alternatively, the position information includes at least one of: a position of the terminal device, a position of a serving satellite, a position of a non-serving satellite, a position of a network device, and a reference point position. Alternatively, the ephemeris information includes at least one of: ephemeris information of a serving satellite and ephemeris information of a non-serving satellite. Alternatively, the timing information includes at least one of: a common TA value (such as a timing offset value between the network device and the reference point and/or a timing offset value between the network device and the satellite), a common TA variation value, and a timestamp. Alternatively, the frequency offset information includes at least one of: a Doppler frequency shift, a Doppler frequency shift variation, a moving speed of a serving satellite, and a moving speed of a non-serving satellite. Alternatively, the synchronization assistance information is transmitted by the network device via at least one of: a system message (for example, an NTN dedicated system message), an RRC configuration, a MAC CE, and DCI.

In an implementation, the first TA information is estimated by the terminal device based on at least one of: a speed of a satellite, a position of the satellite, ephemeris information, a timestamp, a position of the terminal device, and a Global Navigation Satellite System (GNSS).

The network device needs to transmit to the terminal device, the synchronization assistance information, e.g., at least one of ephemeris information, a moving speed of a satellite, a position of the satellite, a reference point position, a common timing offset value (such as a timing offset value between the network device and the reference point and/or a timing offset value between the network device and the satellite), a timestamp, etc., for the terminal device to complete time domain and/or frequency domain synchronization. Correspondingly, the terminal device needs to acquire the synchronization assistance information transmitted by the network device, and at the same time, to complete the corresponding time domain and/or frequency domain synchronization according to its own GNSS capability. The terminal device should obtain, based on its GNSS capability, information including at least one of: a position, a time reference, and a frequency reference of the terminal device. And based on the above information and the synchronization assistance information indicated by the network device (such as ephemeris information or timestamp of the serving satellite), the terminal device may calculate the timing and the frequency offset, and apply TA compensation or frequency offset adjustment in the idle state or inactive state.

As an example, the terminal device estimates a UE-specific TA in the following manner.

Approach 1, in which

the terminal device estimates the UE-specific TA based on the position acquired by the GNSS and the ephemeris information of a serving satellite indicated by the network device.

Approach 2, in which

the terminal device estimates the UE-specific TA based on the reference time acquired by the GNSS and the reference time indicated by the network device, such as the timestamp.

In some embodiments, if the terminal device is in an idle state or an inactive state. That is, before the terminal device initiates a random access procedure, the terminal device in the idle state or the inactive state may calculate $T_{TA}$ according to the following approach, and transmit Msg1 or MsgA according to the determined $T_{TA}$:

$$T_{TA} = (N_{TA, \text{UE-specific}} + N_{TA, \text{offset}} + N_{TA, \text{common}}) * T_c;$$

or

$$T_{TA} = (N_{TA, \text{UE-specific}} + N_{TA, \text{offset}}) * T_c + N_{TA, \text{common}},$$

where $N_{TA, \text{UE-specific}}$ may be a TA value estimated by the terminal device itself, that is, first TA information or a TA value determined based on the first TA information; $N_{TA, \text{offset}}$ is determined according to a network deployment frequency band and an LTE or NR coexistence situation (as an example, $N_{TA, \text{offset}}$ may be broadcast by the network device, or a default value if the network device does not broadcast); $N_{TA, \text{common}}$ includes a common timing offset value broadcast by the network device, for example, it may be obtained according to the second TA information, and a granularity or unit of $N_{TA, \text{common}}$ is determined according to Tc; and Tc represents a sampling time interval unit, where Tc=1/(480*1000*4096).

In some embodiments, if the network device does not broadcast the second TA information, $N_{TA, common}$ is a default value or $N_{TA, common}$ is 0.

In some embodiments, the terminal device may calculate $T_{TA}$ according to the following formula, and perform transmission of the uplink channel or signal (for example, PUSCH scheduled by the RAR uplink grant, PUSCH scheduled by the fallback RAR uplink grant, PUCCH corresponding to the successful RAR and carrying the HARQ-ACK information) according to the determined $T_{TA}$:

$$T_{TA} = (N_{TA} + N_{TA, \text{UE-specific}} + N_{TA, \text{offset}} + N_{TA, \text{common}})*T_{C},$$

where $N_{TA, \text{UE-specific}}$ may be a TA value estimated by the terminal device itself, that is, first TA information or a TA value determined based on the first TA information; $N_{TA}$ may be a TA value indicated by the network device via the RAR; $N_{TA, common}$ includes a common timing offset value broadcast by the network device, for example, it may be obtained according to the second TA information; and a granularity or unit of $N_{TA, common}$ is determined according to Tc; and Tc represents a sampling time interval unit, where Tc=1/(480* 1000*4096).

In some embodiments, if the network device does not broadcast the second TA information, $N_{TA, common}$ is a default value or $N_{TA, common}$ is 0.

In some embodiments, the $N_{TA}$ value indicated by the network device via the RAR is only a positive value or a non-negative value.

In some embodiments, the $N_{TA}$ value indicated by the network device via the RAR may be a positive value or a negative value or 0.

In an implementation, for the PUSCH scheduled by the RAR uplink grant, the PUSCH scheduled by the fallback RAR uplink grant, the PUCCH corresponding to the successful RAR and carrying the HARQ-ACK information, or the MsgA PUSCH corresponding to the MsgA, the terminal device may carry $N_{TA, \text{UE-specific}}$ related indication information in the transmission process of the above channels.

In some embodiments, if the terminal device is in the connected state, $T_{TA}$ may be calculated according to the following formula, and uplink channel or signal transmission (for example, other uplink transmissions than transmission of Msg1, MsgA, PUSCH scheduled by the RAR uplink grant, PUSCH scheduled by the fallback RAR uplink grant, and PUCCH corresponding to the successful RAR and carrying HARQ-ACK information) may be performed according to the determined $T_{TA}$:

$$T_{TA} = (N_{TA} + N_{TA, \text{UE-specific}} + N_{TA, \text{offset}} + N_{TA, \text{common}})*T_{C},$$

where $N_{TA, \text{UE-specific}}$ may be a TA value estimated by the terminal device itself, that is, first TA information or a TA value determined based on the first TA information; $N_{TA, \text{offset}}$ is determined according to a network deployment frequency band and an LTE or NR coexistence situation (as an example, $N_{TA, \text{offset}}$ may be broadcast by the network device, or a default value if the network device does not broadcast); $N_{TA, common}$ includes a common timing offset value broadcast by the network device, for example, it may be obtained according to the second TA information, and a granularity or unit of $N_{TA, common}$ is determined according to Tc; Tc represents a sampling time interval unit, where Tc=1/(480*1000*4096); and $N_{TA}$ may be a TA value indicated by the network device, for example, may be a TA value indicated in the TA command.

In some embodiments, if the network device does not broadcast the second TA information, $N_{TA, common}$ is a default value or $N_{TA, common}$ is 0.

In some embodiments, the $N_{TA}$ value indicated by the network device via the TA command MAC CE is only a positive value or a non-negative value.

In some embodiments, the $N_{TA}$ value indicated by the network device via the TA command MAC CE may be a positive value or a negative value or 0.

In an implementation, the terminal device may transmit $N_{TA, \text{UE-specific}}$ related indication information to the network device via the uplink MAC CE.

In other words, for NTN, the terminal device needs to jointly estimate and update the TA according to the TA value estimated by the terminal device itself, the common timing offset value broadcast by the network device, and the TA value indicated by the network device.

In other words, for the terminal device in the NTN system, the terminal device is required to have the capability of performing TA adjustment using the GNSS module. In other words, the terminal device needs to perform the uplink transmission according to the TA value estimated by the terminal device itself. That is to say, the timing relationship between the downlink frame and the uplink frame of the terminal device is determined according to the TA value estimated by the UE itself.

FIG. 11 is a schematic diagram of a timing relationship between a downlink frame and an uplink frame of a terminal device in an NTN system provided by an embodiment of the present disclosure.

As shown in FIG. 11, for frames with the same number, the time length in advance of the uplink frame transmission relative to the downlink frame reception is $T_{TA} = (N_{TA} + N_{TA, UE-specific} + N_{TA, offset} + N_{TA, common})*Tc$. In this case, the UE may perform TA adjustment according to the TA value estimated by the UE itself.

In some embodiments, the first TA information includes at least one of a first TA value and first TA variation information.

In an implementation, the first TA variation information is used to measure variation of the first TA value within a unit of time, where the unit of time may be millisecond, second, time slot, etc., which is not limited by the present disclosure. For example, the first TA variation information is a TA offset (drift) of the first TA value.

In an implementation, the first TA variation information may include TA variation information of a serving link of the terminal device.

In some embodiments, if two adjacent time slots overlap due to adjusting the first uplink TA value according to the first TA information, the terminal device does not expect to adjust the first uplink TA value according to the first TA information; or if the two adjacent time slots overlap due to adjusting the first uplink TA value according to the first TA information, and a length of an overlapping portion is greater than or equal to a first threshold, the terminal device does not expect to adjust the first uplink TA value according to the first TA information.

In an implementation, the first threshold is determined according to a length of a Cyclic Prefix (CP).

In an implementation, the first threshold is a length of the CP or half of the length.

It should be noted that, in the embodiments of the present disclosure, "if ..." in the embodiments of the present disclosure may be interpreted as "if" or "when ...", "in a case of...", "in a case where ...", "when determining ...", "in response to ..." or "in response that ...". Similarly, depending on the context, the phrases "if..., then the terminal device does not expect to adjust ..." or "if..., then the terminal device adjusts ..." may be interpreted as "when it is determined that ..., the terminal device does not perform an adjustment operation" or "when it is determined that..., the terminal device performs an adjustment operation". It should be understood that the term "if" as mentioned below may also be interpreted according to the above explanation, and will not be repeated in order to avoid repetition.

FIG. 12 is a schematic diagram of overlapping of two adjacent time slots due to adjusting a first uplink TA value according to first TA information according to an embodiment of the present disclosure.

As shown in FIG. 12, if the terminal device is scheduled to perform uplink transmission from time slots n-2 to n+1, if an overlap between two adjacent time slots occurs after the first uplink TA value is adjusted according to the first TA information, the terminal device does not adjust the first uplink TA value according to the first TA information during the uplink transmission.

In some embodiments, if adjusting the first uplink TA value according to the first TA information leads to no overlapping of two adjacent time slots, the terminal device adjusts the first uplink TA value according to the first TA information; or if the two adjacent time slots overlap due to adjusting the first uplink TA value according to the first TA information, and a length of an overlapping portion is smaller than or equal to a first threshold, the terminal device adjusts the first uplink TA value according to the first TA information.

In an implementation, the first threshold value is determined according to the length of a Cyclic Prefix (CP).

In an implementation, the first threshold is a length of the CP or half of the length.

FIG. 13 is a schematic diagram of no overlapping due to adjusting a first uplink TA value according to first TA information provided by an embodiment of the present disclosure.

As shown in FIG. 13, if the terminal device is scheduled to perform uplink transmission from time slots n-2 to n+1, if no overlap between two adjacent time slots occurs after the first uplink TA value is adjusted according to the first TA information, the terminal device adjusts the first uplink TA value according to the first TA information during the uplink transmission.

In some embodiments, the method 200 may further include:
determining whether to adjust the first uplink TA value according to the first TA information, based on an overlapping status of the two adjacent time slots due to adjusting the first uplink TA value according to the first TA information.

In other words, the overlapping status of the two adjacent time slots due to adjusting the first uplink TA value according to the first TA information may be used as a decision status for the terminal device to decide whether to adjust the first uplink TA value according to the first TA information or not.

In some embodiments, the terminal device does not expect to adjust the first uplink TA value according to the first TA information during uplink transmission.

In an implementation, the uplink transmission includes scheduled continuous uplink transmissions of the terminal device.

In an implementation, the terminal device is scheduled to perform continuous uplink transmissions from time slots n-2 to n+1, and the terminal device does not expect to perform TA adjustment according to the first TA value obtained by itself.

In some embodiments, the terminal device does not expect a length of the scheduled continuous uplink transmissions to be greater than or equal to a second threshold; or the terminal device allows the length of the scheduled continuous uplink transmissions to be smaller than or equal to the second threshold.

In an implementation, the second threshold value is determined based on a frequency or a period at which the terminal device adjusts the first uplink TA value. As an example, the second threshold value is determined based on the frequency or period at which the terminal device adjusts the first uplink TA value by itself. For example, the second threshold value is determined based on the frequency or period at which the terminal device adjusts the first uplink TA value according to the first TA information.

In an implementation, if the terminal device needs to estimate the first uplink TA value by itself every 10ms, the terminal device does not expect the length of the scheduled continuous uplink transmissions to be greater than or equal to 10ms; or, the terminal device allows the length of the scheduled continuous uplink transmissions smaller than or equal to 10ms.

In an implementation, if a downlink reference timing of the terminal device changes and is not compensated, or if the downlink reference timing of the terminal device changes and is partially compensated without receiving a TA command,

> the terminal device adjusts the first TA information; or
> the terminal device adjusts the first uplink TA value according to the first TA information; or
> the terminal device adjusts the second uplink TA value according to the first TA information.

In an implementation, the terminal device compensates for an uncompensated portion by adjusting the first TA information.

In an implementation, the second TA information is acquired through a Random Access Response (RAR) or a TA command transmitted by the network device.

In an implementation, the second TA information includes at least one of a second TA value and second TA variation information.

In an implementation, the second TA variation information is used to measure variation of the second TA value within a unit of time, where the unit of time may be millisecond, second, time slot, etc., which is not limited by the present disclosure. For example, the second TA variation information is a TA offset (drift) of the second TA value.

In an implementation, the second TA variation information may include TA variation information of a feeder link of the terminal device.

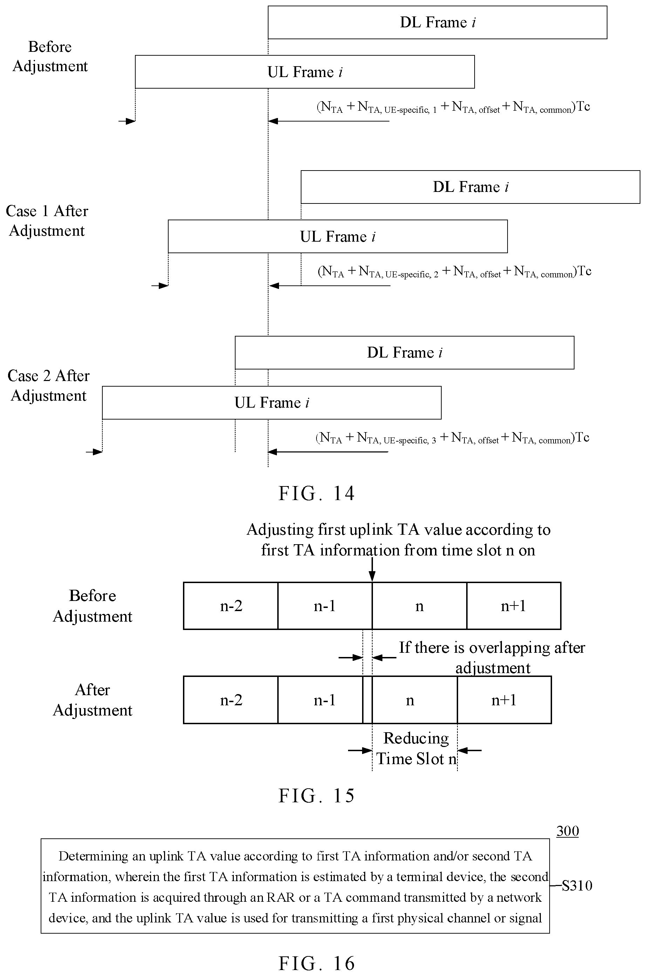

FIG. 14 is a schematic comparison diagram before and after adjustment of a first uplink TA value by a terminal device according to first TA information according to an embodiment of the present disclosure.

As shown in FIG. 14, the terminal device adjusts the first uplink TA value according to the first TA information. If the terminal device is in a connected state, $T_{TA}$ may be calculated according to the following formula, and the uplink channel or signal transmission may be performed according to the determined $T_{TA}$:

$$T_{TA} = (N_{TA} + N_{TA,\text{UE-specific}} + N_{TA,\text{offset}} + N_{TA,\text{common}})^*Tc,$$

where $N_{TA,\text{UE-specific}}$ may be a TA value estimated by the terminal device itself, i.e., first TA information or a TA value determined based on the first TA information.

Based on this, the terminal device adjusts the first uplink TA value according to the first TA information. Before the terminal device adjusts the first uplink TA value according to the first TA information, $N_{TA,\text{UE-specific}}$ is $N_{TA,\text{UE-specific},1}$, thus $T_{TA} = (N_{TA} + N_{TA,\text{UE-specific},1} + N_{TA,\text{offset}} + N_{TA,\text{common}})^*Tc$; when the adjusted $N_{TA,\text{UE-specific}}$ is $N_{TA,\text{UE-specific},2}$, $T_{TA} = (N_{TA} + N_{TA,\text{UE-specific},2} + N_{TA,\text{offset}} + N_{TA,\text{common}})^*Tc$; and when the adjusted $N_{TA,\text{UE-specific}}$ is $N_{TA,\text{UE-specific},3}$, $T_{TA} = (NTA + N_{TA,\text{UE-specific},3} + NTA_{,\text{offset}} + N_{TA,\text{common}})^*Tc$.

In some embodiments, if the terminal device does not receive TA indication information transmitted by a network device or does not acquire second TA information, the terminal device adjusts the first uplink TA value according to the first TA information.

In an implementation, the behaviors of the terminal device may include: adjusting the first uplink TA value according to the self-estimated TA value and the TA value transmitted by the network device to obtain the second uplink TA value; or adjusting the first uplink TA value according to the self-estimated TA value to obtain the second uplink TA value.

In an implementation, the TA indication information transmitted by the network device is used to indicate the second TA information.

If the two adjacent time slots overlap due to adjusting the first uplink TA value according to the first TA information,

a length of an earlier one of the two adjacent time slots is reduced; or

a length of a later one of the two adjacent time slots is reduced; or

a length of each time slot of the two adjacent time slots that is not used for transmission is reduced.

In an implementation, the reduced length is equal to the length of the overlapping portion of the two adjacent time slots.

In an implementation, if the two adjacent time slots are both used for uplink transmission, or if the two adjacent time slots are both not used for uplink transmission, a predefined rule is required to be used. For example, if the two adjacent time slots are both used for uplink transmission, the terminal device does not expect to use the first TA information to adjust the first uplink TA value; if the two adjacent time slots are both not used for uplink transmission, the latter time slot of the two adjacent time slots is reduced.

FIG. 15 is an example of reducing a length of a later time slot among two adjacent time slots provided by an embodiment of the present disclosure.

As shown in FIG. 15, if the terminal device is scheduled to perform uplink transmission from time slots n-2 to n+1, if an overlap between two adjacent time slots (n-1 and n) occurs after the first uplink TA value is adjusted according to the first TA information, the terminal device reduces the length of the later time slot (i.e., time slot n) of the two adjacent time slots.

In some embodiments, the method 200 may further include:

performing uplink transmission by applying the second uplink TA value in an uplink time unit n+m+1, where n represents an uplink time unit for acquiring or estimating the first TA information, and m is a number greater than or equal to 0.

In an implementation, m is predefined or determined according to a predefined rule; or m is determined according to the capability of the terminal device; or m is determined according to a configuration parameter of the network device. As an example, the terminal device reports capability information of the terminal device, and accordingly, the network device configures a parameter for the terminal device based on the capability information reported by the terminal device.

In an implementation, the uplink time unit includes, but is not limited to, a time slot, a subframe, a symbol, or a resource unit etc.

In some embodiments, the method 200 may further include:

determining the uplink time unit in which the second uplink TA value is applied for uplink transmission, based on the overlapping status of the two adjacent time slots due to adjusting the first uplink TA value according to the first TA information.

In an implementation, if the two adjacent time slots overlap due to adjusting the first uplink TA value according to the first TA information, the terminal device performs unlink transmission by applying the second uplink TA value after the ongoing uplink transmission ends; or if adjusting the first uplink TA value according to the first TA information leads to no overlapping of two adjacent time slots, the terminal device performs uplink transmission by applying the second uplink TA value in the uplink time unit n+m+1, where n represents an uplink time unit for acquiring or estimating the first TA information, and m is a number greater than or equal to 0.

In an implementation, m is predefined or determined according to a predefined rule; or m is determined according to the capability of the terminal device; or m is determined according to a configuration parameter of the network device. As an example, the terminal device reports capability information of the terminal device, and accordingly, the network device configures a parameter for the terminal device based on the capability information reported by the terminal device.

In an implementation, the uplink time unit includes, but is not limited to, a time slot, a subframe, a symbol, or a resource unit etc.

In some embodiments, the two adjacent time slots include a first time slot and a second time slot, and the first time slot is a first time slot in which the second uplink TA value is applied, and the second time slot is an adjacent time slot before the first time slot.

In some embodiments, S210 may include:

acquiring the first TA information according to a first subcarrier spacing.

In an implementation, the first subcarrier spacing is a subcarrier spacing of an uplink active Bandwidth Part (BWP); or the terminal device is configured with a plurality of uplink active BWPs, and the first subcarrier spacing is a largest one of the plurality of uplink active BWPs; or the terminal device performs uplink active BWP switching between acquiring the first TA information and performing uplink transmission by applying the second uplink TA value, and the first subcarrier spacing is a subcarrier spacing of a new uplink active BWP; or the terminal device performs uplink active BWP switching after performing uplink transmission by applying the second uplink TA value, and an absolute value of the second uplink TA value remains unchanged before switching the active BWP and after switching the active BWP.

In an implementation, the terminal device performs uplink active BWP switching after performing uplink transmission by applying the second uplink TA value, and an absolute value of the first uplink TA value remains unchanged before switching the active BWP and after switching the active BWP, or both the absolute value of the first uplink TA value and the absolute value of the second uplink TA value remain unchanged before switching the active BWP and after switching the active BWP.

In some embodiments, an error of the second uplink TA value satisfies a precision index.

In an implementation, in the process of the terminal device adjusting the first uplink TA value according to the first TA information, the terminal device ensures that the accuracy of the transmission timing of the initial transmission and the accuracy of the transmission timing of the subsequent slow transmission meet certain indexes.

In some embodiments, S210 may include:
estimating the first TA information within a time unit that is configured by a network or is predefined.

In the NTN system, with the solutions in the present disclosure, when the terminal device adjusts the first uplink TA value according to the self-estimated first TA information such as the first TA value and the position of the satellite changes, it is beneficial for the terminal device to self-compensate the variation of transmission timing caused by the variation of the position of the satellite, which improves the transmission timing adjustment method for the NTN system.

FIG. 16 is an exemplary flowchart of a transmission timing determination method 300 provided by an embodiment of the present disclosure, which may be performed by a terminal device, e.g., the terminal devices as shown in FIG. 1 to FIG. 5.

As shown in FIG. 16, the method 300 may include part or all of the following:
S310 of determining an uplink TA value according to first TA information and/or second TA information.

The first TA information is estimated by the terminal device, the second TA information is acquired through a Random Access Response (RAR) or a TA command transmitted by a network device, and the uplink TA value is used for transmitting a first physical channel or signal.

In some embodiments, the first TA information includes at least one of a first TA value and first TA variation information.

In some embodiments, the second TA information includes at least one of a second TA value and second TA variation information.

In some embodiments, S310 may include:
determining the uplink TA value according to $N_{TA, \text{ UE-specific}}$, where $N_{TA, \text{ UE-specific}}$ is adjusted according to a formula as follows:

$$N_{TA,\text{UE-specific, new}} = N_{TA,\text{UE-specific, old}} + \Delta N_{TA,\text{UE-specific}},$$

where $N_{TA, \text{ UE-specific, old}}$ and/or $\Delta N_{TA,\text{UE-specific}}$ are obtained according to the first TA information.

In an implementation, $\Delta N_{TA,\text{UE-specific}}$ is obtained according to first TA variation information in the first TA information.

In some embodiments, S310 may include:
determining the uplink TA value according to $N_{TA, \text{ common}}$, where $N_{TA, \text{ common}}$ is adjusted according to a formula as follows:

$$N_{TA, \text{ common, new}} = N_{TA, \text{ common, old}} + \Delta N_{TA, \text{ common}},$$

where $\Delta N_{TA, \text{ common}}$ is obtained according to the second TA information.

In an implementation, $\Delta N_{TA, \text{ common}}$ is obtained according to second TA variation information in the second TA information.

In an implementation, $N_{TA,\text{common}}$ may include a TA value of a feeder link of the terminal device; or include a TA value of a link between the network device and the satellite; or include a TA value of a link between the network device and the reference point; or include a TA value of a link between the reference point and the satellite.

In some embodiments, S310 may include:
determining the uplink TA value according to $N_{TA, \text{ UE-specific}}$, $N_{TA}$ and $N_{TA, \text{ common}}$, where $N_{TA, \text{ UE-specific}}$ is obtained according to the first TA information, $N_{TA}$ is obtained according to the second TA information, and $N_{TA, \text{ common}}$ is obtained according to common TA information broadcast by the network device.

In an implementation, $N_{TA,\text{common}}$ may include a TA value of a feeder link of the terminal device; or include a TA value of a link between the network device and the satellite; or include a TA value of a link between the network device and the reference point; or include a TA value of a link between the reference point and the satellite.

In an implementation, the uplink TA value is determined according to $N_{TA, \text{ UE-specific}}$, $N_{TA}$ and $N_{TA, \text{ common}}$ based on the following formula:

$$T_{TA} = ( N_{TA, \text{ UE-specific}} + N_{TA} + N_{TA, \text{ offset}} + N_{TA, \text{ common}} )^* Tc,$$

where $T_{TA}$ represents the uplink TA value, $N_{TA, offset}$ is determined according to a frequency domain range of a cell and a multiplexing mode of the uplink transmission, and Tc represents a sampling time interval unit.

In an implementation, each term in the above formula may be updated independently.

For example, $N_{TA, UE-specific}$ is updated according to the time unit of the self-estimated TA.

For another example, $N_{TA}$ is updated after receiving the indication information of the network device.

In an implementation, $N_{TA, offset}$ may also be broadcast by the network device. $N_{TA, offset}$ may be a default value if the network device does not broadcast.

In some embodiments, the second TA information is acquired through the RAR transmitted by the network device, and the first physical channel or signal includes at least one of: a Physical Uplink Shared Channel (PUSCH) scheduled by an RAR uplink grant, a PUSCH scheduled by a fallback RAR uplink grant, and a Physical Uplink Control Channel (PUCCH) corresponding to a successful RAR and carrying Hybrid Automatic Repeat Request-Acknowledgement (HARQ-ACK) information.

In an implementation, the terminal device is in an idle state or an inactive state.

In some embodiments, the second TA information is acquired through the TA command transmitted by the network device, and the first physical channel or signal includes an uplink physical channel or signal except Message 1 (Msg1), Message A (MsgA), the PUSCH scheduled by the RAR uplink grant, the PUSCH scheduled by the fallback RAR uplink grant, and the PUCCH corresponding to the successful RAR and carrying the HARQ-ACK information.

In an implementation, the TA command is carried by a Media Access Control Control Element (MAC CE) or Downlink Control Information (DCI).

In an implementation, the terminal device is in a connected state.

In some embodiments, the first TA information being estimated by the terminal device includes: the first TA information being estimated by the terminal device based on at least one of: a velocity of a satellite, a position of a satellite, ephemeris information, a timestamp, a position of a terminal device, and Global Navigation Satellite System (GNSS).

The preferred embodiments of the present disclosure have been described in detail above in conjunction with the accompanying drawings. However, the present disclosure is not limited to the specific details in the above embodiments. Within the scope of the technical concept of the present disclosure, various simple modifications may be made to the technical solutions of the present disclosure. These simple modifications all belong to the protection scope of the present disclosure. For example, various specific technical features described in the above specific implementations may be combined in any suitable manner if there is no contradiction. In order to avoid unnecessary repetition, the present disclosure no longer describes the various possible combinations. As another example, any combination of various implementations of the present disclosure may also be made, as long as they do not violate the idea of the present disclosure, which should also be regarded as the content disclosed in the present disclosure.

It should also be understood that in the various method embodiments of the present disclosure, the sequence numbers of the above-mentioned processes do not mean the order of execution that should be determined by their functions and internal logic, and should not be used to limit the implementations of the present disclosure. In addition, in the embodiments of the present disclosure, the terms "downlink (DL)" and "uplink (UL)" are used to indicate the transmission direction of signals or data, "downlink (DL)" is used to indicate that the transmission direction of signals or data is a first direction from the station to the user equipment in the cell, and "uplink (UL)" is used to indicate that the transmission direction of signals or data is a second direction from the user equipment in the cell to the station. For example, "downlink signal" indicates that the signal transmission direction is the first direction. In addition, in the embodiments of the present disclosure, the term "and/or" herein just defines some association between associated objects, which means that there may be three relationships. For example, A and/or B may include three cases where there is only A, there are both A and B, and there is only B. In addition, the character "/" herein generally indicates that the contextual objects are in an "or" relationship.

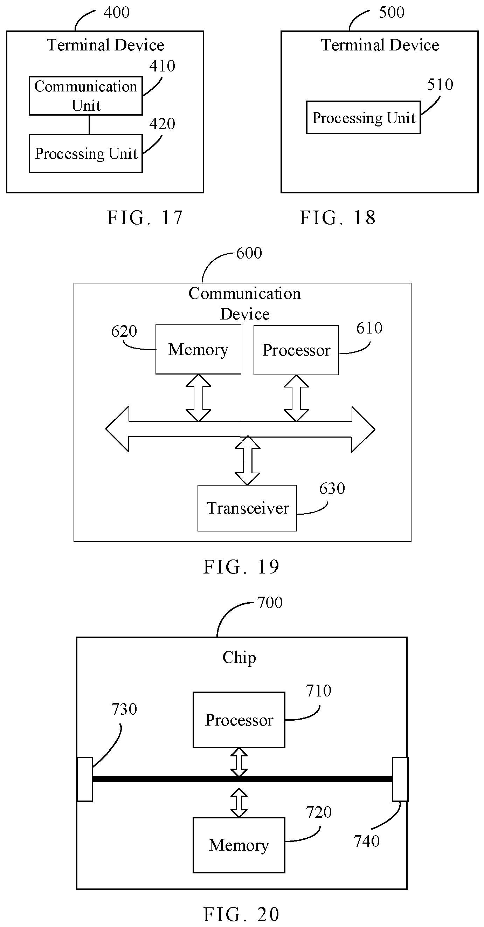

The method embodiments of the present disclosure are described above in detail in conjunction with FIG. 1 to FIG. 16. Hereinafter, the device embodiments of the present disclosure will be described in detail in conjunction with FIG. 17 to FIG. 20.

FIG. 17 is a schematic block diagram of a terminal device 400 according to an embodiment of the present disclosure.

As shown in FIG. 17, the terminal device 400 may include:

a communication unit 410 configured to acquire first TA information, the first TA information being estimated by a terminal device; and
a processing unit 420 configured to adjust a first uplink TA value according to the first TA information to obtain a second uplink TA value.

In some embodiments, the first TA information includes at least one of a first TA value and first TA variation information.

In some embodiments, if two adjacent time slots overlap due to adjusting the first uplink TA value according to the first TA information, the terminal device does not expect to adjust the first uplink TA value according to the first TA information; or if the two adjacent time slots overlap due to adjusting the first uplink TA value according to the first TA information and a length of an overlapping portion is greater than or equal to a first threshold, the terminal device does not expect to adjust the first uplink TA value according to the first TA information.

In some embodiments, if adjusting the first uplink TA value according to the first TA information leads to no overlapping of two adjacent time slots, the terminal device adjusts the first uplink TA value according to the first TA information; or if the two adjacent time slots overlap due to adjusting the first uplink TA value according to the first TA information and a length of an overlapping portion is smaller than or equal to a first threshold, the terminal device adjusts the first uplink TA value according to the first TA information.

In an implementation, the first threshold value is determined according to a length of a cyclic prefix (CP).

In an implementation, the first threshold is a length of a CP or half of the length.

In some embodiments, the processing unit 420 is further configured to determine whether to adjust the first uplink TA value according to the first TA information, based on an overlapping status of the two adjacent time slots due to adjusting the first uplink TA value according to the first TA information.

In some embodiments, the terminal device does not expect to adjust the first uplink TA value according to the first TA information during uplink transmission.

In an implementation, the uplink transmission includes scheduled continuous uplink transmissions of the terminal device.

In some embodiments, the terminal device does not expect a length of the scheduled continuous uplink transmissions to be greater than or equal to the second threshold; or the terminal device allows the length of the scheduled continuous uplink transmissions to be smaller than or equal to the second threshold.

In an implementation, the second threshold value is determined based on a frequency or a period at which the terminal device adjusts the first uplink TA value.

In some embodiments, if a downlink reference timing of the terminal device changes and is not compensated, or if the downlink reference timing of the terminal device changes and is partially compensated without receiving a TA command,

the terminal device adjusts the first TA information; or
the terminal device adjusts the first uplink TA value according to the first TA information; or
the terminal device adjusts the second uplink TA value according to the first TA information.

In some embodiments, if the terminal device does not receive TA indication information transmitted by a network device or does not acquire second TA information, the terminal device adjusts the first uplink TA value according to the first TA information.

In an implementation, the second TA information is acquired through a Random Access Response (RAR) or a TA command transmitted by the network device.

In an implementation, the second TA information includes at least one of a second TA value and second TA variation information.

In some embodiments, if the two adjacent time slots overlap due to adjusting the first uplink TA value according to the first TA information,

a length of an earlier one of the two adjacent time slots is reduced; or
a length of a later one of the two adjacent time slots is reduced; or
a length of each time slot of the two adjacent time slots that is not used for transmission is reduced.

In an implementation, the reduced length is equal to the length of the overlapping portion of the two adjacent time slots.

In some embodiments, the communication unit 410 is further configured to:
perform uplink transmission by applying the second uplink TA value in an uplink time unit n+m+1, where n represents an uplink time unit for acquiring or estimating the first TA information, and m is a number greater than or equal to 0.

In an implementation, m is predefined or determined according to a predefined rule; or m is determined according to capability of the terminal device; or m is determined according to a configuration parameter of the network device.

In some embodiments, the processing unit 420 is further configured to:
determine the uplink time unit in which the second uplink TA value is applied for uplink transmission, based on the overlapping status of the two adjacent time slots due to adjusting the first uplink TA value according to the first TA information.

In an implementation, if the two adjacent time slots overlap due to adjusting the first uplink TA value according to the first TA information, the terminal device performs uplink transmission by applying the second uplink TA value after the ongoing uplink transmission ends; or if adjusting the first uplink TA value according to the first TA information leads to no overlapping of two adjacent time slots, the terminal device performs uplink transmission by applying the second uplink TA value in the uplink time unit n+m+1, where n represents an uplink time unit for acquiring or estimating the first TA information.

In some embodiments, the two adjacent time slots include a first time slot and a second time slot, and the first time slot is a first time slot to which the second uplink TA value is applied, and the second time slot is an adjacent time slot before the first time slot.

In some embodiments, the communication unit 410 is particularly configured to:
acquire the first TA information according to a first subcarrier spacing.

In an implementation, the first subcarrier spacing is a subcarrier spacing of an uplink active Bandwidth Part (BWP); or the terminal device is configured with a plurality of uplink active BWPs, and the first subcarrier spacing is a largest one of the plurality of uplink active BWPs; or the terminal device performs uplink active BWP switching between acquiring the first TA information and performing uplink transmission by applying the second uplink TA value, and the first subcarrier spacing is a subcarrier spacing of a new uplink active BWP; or the terminal device performs uplink active BWP switching after performing uplink transmission by applying the second uplink TA value, and an absolute value of the second uplink TA value remains unchanged before switching the active BWP and after switching the active BWP.

In some embodiments, an error of the second uplink TA value satisfies a precision index.

In some embodiments, the communication unit 410 is particularly configured to estimate the first TA information within a time unit that is configured by network or is predefined.

In some embodiments, the first TA information is estimated by the terminal device based on at least one of: a velocity of a satellite, a position of a satellite, ephemeris information, a timestamp, a position of the terminal device, and Global Navigation Satellite System (GNSS).

FIG. 18 is a schematic block diagram of a terminal device 500 according to an embodiment of the present disclosure.

As shown in FIG. 18, the terminal device 500 may include:
a processing unit 510, configured to determine an uplink TA value according to first TA information and/or second TA information.

The first TA information is estimated by the terminal device, the second TA information is acquired through a Random Access Response (RAR) or a TA command transmitted by a network device, and the uplink TA value is used for transmitting a first physical channel or signal.

In some embodiments, the first TA information includes at least one of a first TA value and first TA variation information.

In some embodiments, the second TA information includes at least one of a second TA value and second TA variation information.

In some embodiments, the processing unit 510 is particularly configured to:

determine the uplink TA value according to $N_{TA, \text{UE-specific}}$, where $N_{TA, \text{UE-specific}}$ is adjusted according to a formula as follows:

$$N_{TA,\text{UE-specific, new}} = N_{TA,\text{UE-specific, old}} + \Delta N_{TA,\text{UE-specific}},$$

where $N_{TA, \text{UE-specific, old}}$ and/or $\Delta N_{TA,\text{UE-specific}}$ are obtained according to the first TA information.

In some embodiments, the processing unit 510 is particularly configured to:

determine the uplink TA value according to $N_{TA, \text{common}}$, where $N_{TA, \text{common}}$ is adjusted according to a formula as follows:

$$N_{TA, \text{common, new}} = N_{TA, \text{common, old}} + \Delta N_{TA, \text{common}},$$

where $\Delta N_{TA, \text{common}}$ is obtained according to the second TA information.

In some embodiments, the processing unit 510 is particularly configured to:
determine the uplink TA value according to $N_{TA, \text{UE-specific}}$, $N_{TA}$ and $N_{TA, \text{common}}$, where $N_{TA, \text{UE-specific}}$ is obtained according to the first TA information, $N_{TA}$ is obtained according to the second TA information, and $N_{TA, common}$ is obtained according to common TA information broadcast by the network device.

In an implementation, the processing unit 510 is particularly configured to:

$$T_{TA}= ( N_{TA, UE\text{-}specific}+ N_{TA}+ N_{TA, offset}+ N_{TA, common} )* T_c,$$

where $T_{TA}$ represents the uplink TA value, $N_{TA, offset}$ is determined according to a frequency domain range of a cell and a multiplexing mode of the uplink transmission, and $T_c$ represents a sampling time interval unit.

In some embodiments, the second TA information is acquired through the RAR transmitted by the network device, and the first physical channel or signal includes at least one of: a Physical Uplink Shared Channel (PUSCH) scheduled by an RAR uplink grant, a PUSCH scheduled by a fallback RAR uplink grant, and a Physical Uplink Control Channel (PUCCH) corresponding to a successful RAR and carrying Hybrid Automatic Repeat Request-Acknowledgement (HARQ-ACK) information.

In an implementation, the terminal device is in an idle state or an inactive state.

In some embodiments, the second TA information is acquired by through the TA command transmitted by the network device, and the first physical channel or signal includes an uplink physical channel or signal except Message 1 (Msg1), Message A (MsgA), the PUSCH scheduled by the RAR uplink grant, the PUSCH scheduled by the fallback RAR uplink grant, and the PUCCH corresponding to the successful RAR and carrying the HARQ-ACK information.

In an implementation, the TA command is carried by a Media Access Control Control Element (MAC CE) or Downlink Control Information (DCI).

In an implementation, the terminal device is in a connected state.

In an implementation, the first TA information being estimated by the terminal device includes: the first TA information being estimated by the terminal device based on at least one of: a velocity of a satellite, a position of a satellite, ephemeris information, a timestamp, a position of the terminal device, and Global Navigation Satellite System (GNSS).

It should be understood that the device embodiments and the method embodiments may correspond to each other, and similar descriptions may refer to the method embodiments. Specifically, the terminal device 400 shown in FIG. 17 may correspond to the corresponding entity performing the method 200 of the embodiment of the present disclosure, and the foregoing and other operations and/or functions of each unit in the terminal device 400 are used for implementing the corresponding processes in respective steps of the method of FIG. 10; the terminal device 500 shown in FIG. 18 may correspond to the corresponding entity performing the method 300 of the embodiment of the present disclosure, and the aforementioned and other operations and/or functions of each unit in the terminal device 800 are respectively used for implementing the corresponding processes in respective steps of the method of FIG. 16, details thereof will not be repeated here for the sake of brevity.

The above describes the communication device in the embodiment of the present disclosure from the perspective of functional modules with reference to the accompanying drawings. It should be understood that the functional modules may be implemented in the form of hardware, may also be implemented by instructions in the form of software, and may also be implemented by a combination of hardware and software modules. Specifically, each step of the method embodiments in the embodiments of the present disclosure may be completed by an integrated logic circuit of the hardware in the processor and/or instructions in the form of software. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. The storage medium can be located in the memory, and the processor can read information from the memory and perform the steps of the above methods in combination with its hardware.

For example, the processing unit and the communication unit as mentioned above may be implemented by a processor and a transceiver, respectively.

FIG. 19 is a schematic structural diagram of a communication device 600 according to an embodiment of the present disclosure.

As shown in FIG. 19, the communication device 600 may include a processor 610.

The processor 610 may be configured to invoke and execute a computer program from the memory to implement the methods in the embodiments of the present disclosure.

As shown in FIG. 19, the communication device 600 may further include a memory 620.

The memory 620 may store indication information, and may also store codes, instructions, etc. executed by the processor 610. The processor 610 may be configured to invoke and execute a computer program from the memory 620 to implement the methods in the embodiments of the present disclosure. The memory 620 may be an independent device separately from the processor 610, or may be integrated in the processor 610.

As shown in FIG. 19, the communication device 600 may further include a transceiver 630.

The processor 610 may be configured to control the transceiver 630 to communicate with other devices, in particular, may transmit information or data to other devices, or receive information or data transmitted by other devices. The transceiver 630 may include a transmitter and a receiver. The transceiver 630 may further include one or more antennas.

It should be understood that various components in the communication device 600 are connected through a bus system, and the bus system includes not only a data bus, but also a power bus, a control bus, and a status signal bus.

It should also be understood that the communication device 600 may be the terminal device in the embodiments of the present disclosure, and the communication device 600 may implement the corresponding processes implemented by the terminal device in each method of the embodiments of the present disclosure. That is, the communication device 600 in the embodiment of the present disclosure may correspond to the communication device 400 or the terminal device 500 in the embodiments of the present disclosure, and may correspond to the corresponding entity performing the method 200 or the method 300 according to the embodiments of the present disclosure, and details thereof will not be repeated here for the sake of brevity.

In addition, a chip is also provided in an embodiment of the present disclosure.

For example, a chip might be an integrated circuit chip that has signal processing capabilities and may implement or perform the methods, steps and logic block diagrams disclosed in the embodiments of the present disclosure. The chip may also be called a system level chip, a system chip, a chip system, or a system-on-chip, etc. Alternatively, the chip may be applied to various communication devices to cause the communication device equipped with the chip to perform the methods, steps and logic block diagrams disclosed in the embodiments of the present disclosure.

FIG. 20 is a schematic structural diagram of a chip 700 according to an embodiment of the present disclosure.

As shown in FIG. 20, the chip 700 includes a processor 710.

The processor 710 may be configured to invoke and execute a computer program from the memory to implement the methods in the embodiments of the present disclosure.

As shown in FIG. 20, the chip 700 may further include a memory 720.

The processor 710 may be configured to invoke and execute a computer program from the memory 720 to implement the method in the embodiment of the present disclosure. The memory 720 may store indication information, and may also store codes, instructions, etc. executed by the processor 710. The memory 720 may be an independent device separately from the processor 710, or may be integrated in the processor 710.

As shown in FIG. 20, the chip 700 may further include an input interface 730.

The processor 710 may be configured to control the input interface 730 to communicate with other devices or chips, in particular, may obtain information or data transmitted by other devices or chips.

As shown in FIG. 20, the chip 700 may further include an output interface 740.

The processor 710 may be configured to control the output interface 740 to communicate with other devices or chips, in particular, may output information or data to other devices or chips.

It should be understood that the chip 700 may be applied to the terminal device in the embodiments of the present disclosure, and the chip may implement the corresponding processes implemented by the terminal device in the various methods of the embodiments of the present disclosure, and details thereof will not be repeated here for the sake of brevity.

It should also be understood that the various components in the chip 700 are connected through a bus system, and the bus system includes not only a data bus, but also a power bus, a control bus, and a status signal bus.

The processors as mentioned above may include, but are not limited to:

a General-purpose processor, a Digital Signal Processor (DSP), an Application Specific Integrated Circuit (ASIC), a Field Programmable Gate Array (FPGA), or other programmable logic devices, discrete gates, or transistor logic devices, discrete hardware components, and so on.

The processor may be used to implement or perform the methods, steps and logic block diagrams disclosed in the embodiments of the present disclosure. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. The storage medium can be located in the memory, and the processor can be configured to read information from the memory and perform the steps of the above methods in combination with its hardware.

The memory as mentioned above includes but is not limited to:

a volatile memory and/or a non-volatile memory. The non-volatile memory may be a Read-Only Memory (ROM), a Programmable ROM (PROM), an Erasable PROM, (EPROM), an Electrically EPROM (EEPROM), or a Flash. The volatile memory may be a Random Access Memory (RAM), which acts as an external cache. By way of illustration without any limitation, many forms of RAM are available, such as a Static RAM (SRAM), a Dynamic RAM (DRAM), a Synchronous DRAM (Synchronous DRAM, SDRAM), a Double Data Rate SDRAM (DDR SDRAM), an Enhanced SDRAM (ESDRAM), a synch link DRAM (SLDRAM), and a Direct Rambus RAM (DR RAM).

It should be noted that the memories as described herein are intended to include these and any other suitable types of memories.

Embodiments of the present disclosure also provide a computer-readable storage medium for storing computer programs. The computer-readable storage medium stores one or more programs, and the one or more programs include instructions that, when executed by a portable electronic device including a plurality of application programs, cause the portable electronic device to perform the method in the embodiments as shown in the method 200 or the method 300. Alternatively, the computer-readable storage medium may be applied to the mobile terminal/terminal device in the embodiments of the present disclosure, and the computer program causes the computer to perform the corresponding processes implemented by the mobile terminal/terminal device in the various methods of the embodiments of the present disclosure, and details thereof will not be repeated here for the sake of brevity.

The embodiment of the present disclosure also provides a computer program product, including a computer program. Alternatively, the computer program product may be applied to the mobile terminal/terminal device in the embodiments of the present disclosure, and the computer program causes the computer to execute the corresponding processes implemented by the mobile terminal/terminal device in the methods of the embodiments of the present disclosure, and details thereof will not be repeated here for the sake of brevity.

An embodiment of the present disclosure also provides a computer program. The computer program, when being executed by the computer, causes the computer to perform the methods in the embodiments as shown in the method 200 or the method 300. Alternatively, the computer program may be applied to the mobile terminal/terminal device in the embodiment of the present disclosure. The computer program, when being executed by the computer, causes the computer to perform each method in the embodiment of the present disclosure to be implemented by the mobile terminal/terminal device. For the sake of brevity, the corresponding process will not be repeated here.

An embodiment of the present disclosure also provides a communication system, the communication system may include the above-mentioned terminal device and network device to form a communication system, and details thereof will not be described here for brevity. It should be noted that the terms "system" and the like herein may also be referred to as "network management architecture" or "network system".

It should also be understood that the terms used in the embodiments of the present disclosure and the appended claims are only for the purpose of describing specific embodiments, and are not intended to limit the embodiments of the present disclosure. For example, the singular forms "a", "said", and "the" used in the embodiments of the present disclosure and the appended claims are also intended to include plural forms unless the context clearly indicates otherwise.

The skilled in the art may appreciate that the units and algorithm steps of the examples described in conjunction with the embodiments disclosed herein may be implemented by electronic hardware, or a combination of computer software and electronic hardware. Whether these functions are executed by hardware or software depends on the specific application and design constraints of the technical solution. Professionals and technicians may use different methods to implement the described functions for each specific application, but such implementation should not be regarded as going beyond the scope of the embodiments of the present disclosure. When the function is implemented in the form of a software functional unit and sold or used as a standalone product, it can be stored in a computer-readable storage medium. Based on this understanding, all or part of the technical solutions according to the present disclosure, or the part thereof that contributes to the prior art, can be embodied in the form of a software product. The computer software product may be stored in a storage medium and contain instructions to cause a computer device, such as a personal computer, a server, or a network device, etc., to perform all or part of the steps of the method described in each of the embodiments of the present disclosure. The above mentioned storage medium may include various mediums capable of storing program codes, such as a Universal Serial Bus flash drive, a mobile hard disk, an ROM, an RAM, a magnetic disk, or an optical disc.

The skilled in the art may also realize that, for convenience and brevity of description, the specific operating process of the above-described system, device, and unit may refer to the corresponding process in the foregoing method embodiments, and details thereof will not be repeated here. In the several embodiments provided in the present disclosure, it should be understood that the disclosed systems, devices and methods may be implemented in other ways. For example, the division of units or modules or components in the above-described device embodiments is only a logical function division, and there may be other division approaches in actual implementations. For example, multiple units or modules or components may be combined or integrated to another system, or some units or modules or components may be ignored, or not implemented. For another example, the units/modules/components described above as separate/shown components may or may not be physically separated, that is, they may be located in one place, or may also be distributed to multiple network units. Part or all of the units/modules/components may be selected according to actual requirements to achieve the purpose of the embodiments of the present disclosure. Finally, it should be noted that the mutual coupling or direct coupling or communication connection shown or discussed above may be indirect coupling or communication connection of devices or units via some interfaces, and may be in electrical, mechanical or other forms.

While the specific embodiments of the present disclosure have been described above, the protect scope of the present disclosure is not limited to these embodiments. Various variants and alternatives may be easily conceived by any of those skilled in the art without departing from the technical scope of the present disclosure. The scope of present disclosure is defined by the claims as attached.

**Claims**

1. A transmission timing adjustment method, applied to a non-terrestrial network, NTN, system, wherein the method is performed by a terminal device, and the method comprises:

   acquiring (S210) first Timing Advance, TA, information, the first TA information is estimated by the terminal device; and
   adjusting (S220) a first uplink TA value according to the first TA information to obtain a second uplink TA value; wherein if two adjacent time slots overlap due to adjusting the first uplink TA value according to the first TA information,
   a length of a later one of the two adjacent time slots is reduced relative to an earlier one of the two adjacent time slots; wherein
   the first TA information being estimated by the terminal device comprises:
   the first TA information being estimated by the terminal device based on at least one of: a velocity of a satellite, a position of the satellite, ephemeris information, a timestamp, a position of the terminal device, and Global Navigation Satellite System, GNSS.

2. The method according to claim 1, wherein the first TA information comprises at least one of a first TA value and first TA variation information; and
   the first TA variation information is used to measure variation of the first TA value within a unit of time.

3. The method according to any one of claims 1 to 2, further comprising:

   not expecting, by the terminal device, to adjust the first uplink TA value according to the first TA information during uplink transmission,
   wherein the uplink transmission comprises scheduled continuous uplink transmissions of the terminal device.

4. The method according to any one of claims 1 to 3, further comprising:

   not expecting, by the terminal device, a length of scheduled continuous uplink transmissions to be greater than or equal to a second threshold; or
   allowing, by the terminal device, the length of the scheduled continuous uplink transmissions to be smaller than or equal to the second threshold.

5. The method according to any one of claims 1 to 4, wherein when a downlink reference timing of the terminal device changes and is not compensated, or when the downlink reference timing of the terminal device changes and is partially compensated without receiving a TA command,

   the terminal device adjusts the first TA information; or
   the terminal device adjusts the first uplink TA value according to the first TA information; or
   the terminal device adjusts the second uplink TA value according to the first TA information.

6. The method according to any one of claims 1 to 5, wherein when the terminal device does not receive TA indication information transmitted by a network device or does not acquire second TA information, the terminal device adjusts the first uplink TA value according to the first TA information.

7. The method according to claim 1, wherein the reduced length is equal to a length of an overlapping portion of the two adjacent time slots.

8. The method according to any one of claims 1 to 7, further comprising:

   performing uplink transmission by applying the second uplink TA value in an uplink time unit $n+m+1$, where $n$

represents an uplink time unit for acquiring or estimating the first TA information, and m is a number greater than or equal to 0; wherein
the uplink time unit comprises one of following: a time slot, a subframe, a symbol and a resource unit.

9. The method according to any one of claims 1 to 8, further comprising:
determining, based on an overlapping status of two adjacent time slots due to adjusting the first uplink TA value according to the first TA information, an uplink time unit in which the second uplink TA value is applied for uplink transmission.

10. The method according to claim 9, wherein

when the two adjacent time slots overlap due to adjusting the first uplink TA value according to the first TA information, the terminal device performs uplink transmission by applying the second uplink TA value after the ongoing uplink transmission ends; or
when adjusting the first uplink TA value according to the first TA information leads to no overlapping of two adjacent time slots, the terminal device performs uplink transmission by applying the second uplink TA value in an uplink time unit n+m+1, where n represents an uplink time unit for acquiring or estimating the first TA information, and m is a number greater than or equal to 0.

11. The method according to any one of claims 1, 7, 9, and 10, wherein the two adjacent time slots comprise a first time slot and a second time slot, wherein the first time slot is a first time slot in which the second uplink TA value is applied, and the second time slot is an adjacent time slot before the first time slot.

12. The method according to any one of claims 1 to 11, wherein said acquiring (S210) the first TA information comprises:
acquiring the first TA information according to a first subcarrier spacing.

13. A terminal device (600), comprising:

a processor (610), and
a memory (620) that stores a computer program, wherein
the processor (610) is configured to invoke and execute the computer program stored in the memory (620) to perform the method according to any one of claims 1 to 12.

14. A computer-readable storage medium, having a computer program stored thereon, the computer program causing a computer to perform the method according to any one of claims 1 to 12.

**Patentansprüche**

1. Verfahren zur Anpassung des Übertragungszeitpunkts, angewendet auf ein nichtterrestrisches Netzwerk-, NTN-, System, wobei das Verfahren durch eine Endgerätvorrichtung durchgeführt wird und wobei das Verfahren umfasst:

Erfassen (S210) erster Timing-Advance-, TA-, Informationen, wobei die ersten TA-Informationen durch die Endgerätvorrichtung geschätzt werden; und
Anpassen (S220) eines ersten Uplink-TA-Wertes gemäß den ersten TA-Informationen, um einen zweiten Uplink-TA-Wert zu erhalten;
wobei, wenn sich zwei benachbarte Zeitschlitze aufgrund des Anpassens des ersten Uplink-TA-Wertes gemäß den ersten TA-Informationen überlappen,
eine Länge eines späteren der zwei benachbarten Zeitschlitze im Verhältnis zu einem früheren der zwei benachbarten Zeitschlitze verkürzt wird; wobei
das Schätzen der ersten TA-Informationen durch die Endgerätvorrichtung umfasst:
die ersten TA-Informationen werden durch die Endgerätvorrichtung basierend auf mindestens einem geschätzt von: einer Geschwindigkeit eines Satelliten, einer Position des Satelliten, Ephemerideninformationen, einem Zeitstempel, einer Position der Endgerätvorrichtung und globalem Navigationssatellitensystem, GNSS.

2. Verfahren nach Anspruch 1, wobei die ersten TA-Informationen mindestens eines von einem ersten TA-Wert und ersten TA-Variationsinformationen umfassen; und
die ersten TA-Variationsinformationen verwendet werden, um die Variation des ersten TA-Wertes innerhalb einer Zeiteinheit zu messen.

3. Verfahren nach einem der Ansprüche 1 bis 2, ferner umfassend:

kein Erwarten, durch die Endgerätvorrichtung, den ersten Uplink-TA-Wert gemäß den ersten TA-Informationen während der Uplink-Übertragung anzupassen,
wobei die Uplink-Übertragung geplante kontinuierliche Uplink-Übertragungen der Endgerätvorrichtung umfasst.

4. Verfahren nach einem der Ansprüche 1 bis 3, ferner umfassend:

kein Erwarten, durch die Endgerätvorrichtung, dass eine Länge geplanter kontinuierlicher Uplink-Übertragungen größer oder gleich einem zweiten Schwellenwert; oder
Erlauben, durch die Endgerätvorrichtung, dass die Länge der geplanten kontinuierlichen Uplink-Übertragungen kleiner oder gleich dem zweiten Schwellenwert ist.

5. Verfahren nach einem der Ansprüche 1 bis 4, wobei, wenn sich ein Downlink-Referenzzeitpunkt der Endgerätvorrichtung ändert und nicht kompensiert wird, oder wenn sich der Downlink-Referenzzeitpunkt der Endgerätvorrichtung ändert und teilweise kompensiert wird, ohne dass ein TA-Befehl empfangen wird,

die Endgerätvorrichtung die ersten TA-Informationen anpasst; oder
die Endgerätvorrichtung den ersten Uplink-TA-Wert gemäß den ersten TA-Informationen anpasst; oder
die Endgerätvorrichtung den zweiten Uplink-TA-Wert gemäß den ersten TA-Informationen anpasst.

6. Verfahren nach einem der Ansprüche 1 bis 5, wobei, wenn die Endgerätvorrichtung keine durch eine Netzwerkvorrichtung übermittelten TA-Indikationsinformationen empfängt oder keine zweiten TA-Informationen erfasst, die Endgerätvorrichtung den ersten Uplink-TA-Wert gemäß den ersten TA-Informationen anpasst.

7. Verfahren nach Anspruch 1, wobei die verkürzte Länge gleich der Länge eines überlappenden Abschnitts der zwei benachbarten Zeitschlitze ist.

8. Verfahren nach einem der Ansprüche 1 bis 7, ferner umfassend:

Durchführen einer Uplink-Übertragung durch Anwenden des zweiten Uplink-TA-Wertes in einer Uplink-Zeiteinheit n+m+1, wobei n eine Uplink-Zeiteinheit zum Erfassen oder Schätzen der ersten TA-Informationen darstellt und m eine Zahl größer oder gleich 0 ist; wobei
die Uplink-Zeiteinheit eines umfasst von: einem Zeitschlitz, einem Subframe, einem Symbol und einer Ressourceneinheit.

9. Verfahren nach einem der Ansprüche 1 bis 8, ferner umfassend:
Bestimmen, basierend auf einem Überlappungsstatus zweier benachbarter Zeitschlitze aufgrund des Anpassens des ersten Uplink-TA-Wertes gemäß den ersten TA-Informationen, einer Uplink-Zeiteinheit, in der der zweite Uplink-TA-Wert für die Uplink-Übertragung angewendet wird.

10. Verfahren nach Anspruch 9, wobei

wenn sich die zwei benachbarten Zeitschlitze aufgrund des Anpassens des ersten Uplink-TA-Wertes gemäß den ersten TA-Informationen überlappen, die Endgerätvorrichtung die Uplink-Übertragung durchführt, indem sie den zweiten Uplink-TA-Wert anwendet, nachdem die laufende Uplink-Übertragung beendet ist; oder
wenn Anpassen des ersten Uplink-TA-Wertes gemäß den ersten TA-Informationen dazu führt, dass sich zwei benachbarte Zeitschlitze nicht überlappen, die Endgerätvorrichtung die Uplink-Übertragung durchführt, indem sie den zweiten Uplink-TA-Wert in einer Uplink-Zeiteinheit n+m+1 anwendet, wobei n eine Uplink-Zeiteinheit zum Erfassen oder Schätzen der ersten TA-Informationen darstellt und m eine Zahl größer oder gleich 0 ist.

11. Verfahren nach einem der Ansprüche 1, 7, 9 und 10, wobei die zwei benachbarten Zeitschlitze einen ersten Zeitschlitz und einen zweiten Zeitschlitz umfassen, wobei der erste Zeitschlitz ein erster Zeitschlitz ist, in dem der zweite Uplink-TA-Wert angewendet wird, und der zweite Zeitschlitz ein benachbarter Zeitschlitz vor dem ersten Zeitschlitz ist.

12. Verfahren nach einem der Ansprüche 1 bis 11, wobei das Erfassen (S210) der ersten TA-Informationen umfasst:

Erfassen der ersten TA-Informationen gemäß einem ersten Subträgerabstand.

**13.** Endgerätvorrichtung (600), umfassend:

einen Prozessor (610), und
einen Speicher (620), der ein Computerprogramm speichert, wobei
der Prozessor (610) so konfiguriert ist, dass er das in dem Speicher (620) gespeicherte Computerprogramm aufruft und ausführt, um das Verfahren nach einem der Ansprüche 1 bis 12 durchzuführen.

**14.** Computerlesbares Speichermedium, das darauf ein gespeichertes Computerprogramm aufweist, wobei das Computerprogramm einen Computer veranlasst, das Verfahren nach einem der Ansprüche 1 bis 12 durchzuführen.

**Revendications**

**1.** Procédé de réglage de synchronisation de transmission, appliqué à un système de réseau non terrestre, NTN, dans lequel le procédé est réalisé par un dispositif terminal, et le procédé comprend :

l'obtention (S210) de premières informations d'avance de synchronisation, TA, les premières informations de TA sont estimées par le dispositif terminal ; et
le réglage (S220) d'une première valeur de TA de liaison montante en fonction des premières informations de TA pour obtenir une seconde valeur de TA de liaison montante ;
dans lequel si deux créneaux temporels adjacents se chevauchent en raison du réglage de la première valeur de TA de liaison montante en fonction des premières informations de TA,
la durée de l'un des deux créneaux temporels adjacents les plus récents est réduite par rapport à celle de l'un des deux créneaux temporels adjacents les plus anciens ; dans lequel
les premières informations de TA estimées par le dispositif terminal comprennent :
les premières informations de TA étant estimées par le dispositif terminal sur la base d'au moins l'un des éléments parmi : la vitesse d'un satellite, la position du satellite, les informations d'éphémérides, un horodatage, la position du dispositif terminal et le système mondial de navigation par satellite, GNSS.

**2.** Procédé selon la revendication 1, dans lequel les premières informations de TA comprennent au moins l'une parmi une première valeur de TA et/ou des premières informations de variation de TA ; et
les premières informations de variation de TA sont utilisées pour mesurer la variation de la première valeur de TA dans une unité de temps.

**3.** Procédé selon l'une quelconque des revendications 1 à 2, comprenant en outre :

le fait que le dispositif terminal ne s'attende pas à régler la première valeur de TA de liaison montante en fonction des premières informations de TA lors de la transmission de liaison montante,
dans lequel la transmission de liaison montante comprend des transmissions de liaison montante continues et programmées du dispositif terminal.

**4.** Procédé selon l'une quelconque des revendications 1 à 3, comprenant en outre :

le fait que le dispositif terminal ne s'attende pas à ce que la durée des transmissions de liaison montante continues et programmées soit supérieure ou égale à un second seuil ; ou
le fait que le dispositif terminal permette que la durée des transmissions de liaison montante continues et programmées soit inférieure ou égale au second seuil.

**5.** Procédé selon l'une quelconque des revendications 1 à 4, dans lequel, lorsque la synchronisation de référence de liaison descendante du dispositif terminal change et n'est pas compensée, ou lorsque la synchronisation de référence de liaison descendante du dispositif terminal change et est partiellement compensée sans réception d'une commande de TA,

le dispositif terminal règle les premières informations de TA ; ou
le dispositif terminal règle la première valeur de TA de liaison montante en fonction des premières informations de TA ; ou

le dispositif terminal règle la seconde valeur de TA de liaison montante en fonction des premières informations de TA.

6. Procédé selon l'une quelconque des revendications 1 à 5, dans lequel, lorsque le dispositif terminal ne reçoit pas d'informations d'indication de TA transmises par un dispositif réseau ou n'obtient pas de secondes informations de TA, le dispositif terminal règle la première valeur de TA de liaison montante en fonction des premières informations de TA.

7. Procédé selon la revendication 1, dans lequel la durée réduite est égale à la durée d'une partie chevauchante des deux créneaux temporels adjacents.

8. Procédé selon l'une quelconque des revendications 1 à 7, comprenant en outre :

   la réalisation de la transmission de liaison montante en appliquant la seconde valeur de TA de liaison montante dans une unité temporelle de liaison montante n + m + 1, où n représente une unité temporelle de liaison montante pour l'obtention ou l'estimation des premières informations de TA, et m est un nombre supérieur ou égal à 0 ; dans lequel
   l'unité temporelle de liaison montante comprend l'un des éléments suivants : un créneau temporel, une sous-trame, un symbole et une unité de ressource.

9. Procédé selon l'une quelconque des revendications 1 à 8, comprenant en outre :
   la détermination, sur la base d'un état de chevauchement de deux créneaux temporels adjacents en raison du réglage de la première valeur de TA de liaison montante en fonction des premières informations de TA, d'une unité temporelle de liaison montante dans laquelle la seconde valeur de TA de liaison montante est appliquée pour la transmission de liaison montante.

10. Procédé selon la revendication 9, dans lequel

    lorsque les deux créneaux temporels adjacents se chevauchent en raison du réglage de la première valeur de TA de liaison montante en fonction des premières informations de TA, le dispositif terminal réalise une transmission de liaison montante en appliquant la seconde valeur de TA de liaison montante après la fin de la transmission de liaison montante en cours ; ou
    lorsque le réglage de la première valeur de TA de liaison montante en fonction des premières informations de TA empêche le chevauchement de deux créneaux temporels adjacents, le dispositif terminal réalise une transmission de liaison montante en appliquant la seconde valeur de TA de liaison montante dans une unité temporelle de liaison montante n + m + 1, où n représente une unité temporelle de liaison montante pour l'obtention ou l'estimation des premières informations de TA, et m est un nombre supérieur ou égal à 0.

11. Procédé selon l'une quelconque des revendications 1, 7, 9 et 10, dans lequel les deux créneaux temporels adjacents comprennent un premier créneau temporel et un second créneau temporel, dans lequel le premier créneau temporel est un premier créneau temporel dans lequel la seconde valeur de TA de liaison montante est appliquée, et le second créneau temporel est un créneau temporel adjacent précédant le premier créneau temporel.

12. Procédé selon l'une quelconque des revendications 1 à 11, dans lequel l'obtention (S210) des premières informations de TA comprend :
    l'obtention des premières informations de TA en fonction d'un premier espacement de sous-porteuses.

13. Dispositif terminal (600), comprenant :

    un processeur (610), et
    une mémoire (620) qui stocke un programme informatique, dans laquelle
    le processeur (610) est configuré pour invoquer et exécuter le programme informatique stocké dans la mémoire (620) afin de réaliser le procédé selon l'une quelconque des revendications 1 à 12.

14. Support de stockage lisible par ordinateur sur lequel est stocké un programme informatique, le programme informatique amenant l'ordinateur à réaliser le procédé selon l'une quelconque des revendications 1 à 12.

100

130

110　　　　120　　　　　　110

FIG. 1

1102

1101

FIG. 2

1202

1203

1201

FIG. 3

EP 4 319 331 B1

FIG. 4

FIG. 5

FIG. 6

Base Station DL | n |

Delay

Terminal DL | n |

←TA→

Terminal DL | n |

Delay

Base Station DL | ... | n |

Base Station DL-UL Frame Timing Offset

FIG. 7

DL Frame *i*

UL Frame *i*

$$\left(N_{\mathrm{TA}}+N_{\mathrm{TA,offset}}\right)T_c$$

FIG. 8

DL Frame *i*

**Before Adjustment**

UL Frame *i*

$$(N_{\mathrm{TA1}}+N_{\mathrm{TA,offset}})T_c$$

DL Frame *i*

**After Adjustment**

UL Frame *i*

$$(N_{\mathrm{TA2}}+N_{\mathrm{TA,offset}})T_c$$

FIG. 9

200

| Acquiring first TA information, the first TA information being estimated by a terminal device | S210 |

| Adjusting a first uplink TA value according to the first TA information to obtain a second uplink TA value | S220 |

FIG. 10

| DL Frame *i* |

| UL Frame *i* |

$(N_{TA} + N_{TA, UE\text{-}specific} + N_{TA, offset} + N_{TA, common})Tc$

FIG. 11

Before Adjustment

| n-2 | n-1 | n | n+1 |

If there is overlapping after adjustment

After Adjustment

| n-2 | n-1 | n | n+1 |

Terminal device does not adjust

FIG. 12

Before Adjustment

| n-2 | n-1 | n | n+1 |

If there is No overlapping after adjustment

After Adjustment

| n-2 | n-1 | n | n+1 |

Terminal device may adjust

FIG. 13

| | DL Frame *i* | |
|---|---|---|

Before
Adjustment

| | UL Frame *i* | |
|---|---|---|

$(N_{TA} + N_{TA, \text{UE-specific, 1}} + N_{TA, \text{offset}} + N_{TA, \text{common}})Tc$

| | DL Frame *i* | |
|---|---|---|

Case 1 After
Adjustment

| | UL Frame *i* | |
|---|---|---|

$(N_{TA} + N_{TA, \text{UE-specific, 2}} + N_{TA, \text{offset}} + N_{TA, \text{common}})Tc$

| | DL Frame *i* | |
|---|---|---|

Case 2 After
Adjustment

| | UL Frame *i* | |
|---|---|---|

$(N_{TA} + N_{TA, \text{UE-specific, 3}} + N_{TA, \text{offset}} + N_{TA, \text{common}})Tc$

FIG. 14

Adjusting first uplink TA value according to
first TA information from time slot n on

Before
Adjustment

| n-2 | n-1 | n | n+1 |
|---|---|---|---|

If there is overlapping after
adjustment

After
Adjustment

| n-2 | n-1 | | n | n+1 |
|---|---|---|---|---|

Reducing
Time Slot n

FIG. 15

300

Determining an uplink TA value according to first TA information and/or second TA information, wherein the first TA information is estimated by a terminal device, the second TA information is acquired through an RAR or a TA command transmitted by a network device, and the uplink TA value is used for transmitting a first physical channel or signal

S310

FIG. 16

400

Terminal Device

410

Communication
Unit

420

Processing Unit

FIG. 17

500

Terminal Device

510

Processing Unit

FIG. 18

600

Communication
Device

620

Memory

610

Processor

630

Transceiver

FIG. 19

700

Chip

730

710

Processor

720

Memory

740

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ERICSSON**. On UL time and frequency synchronization enhancements for NTN. *3GPP DRAFT, R1-2100927*

- **ASIA PACIFIC TELECOM et al.** Timing relationship enhancements to NB-IoT in NTN. *3GPP DRAFT R1-2100977*, 19 January 2021